# EUROPEAN PATENT SPECIFICATION

(11) **EP 4 579 500 B1**
(45) Date of publication and mention of the grant of the patent: **19.08.2026**
(21) Application number: 24223576.0
(22) Date of filing: 28.12.2024
(51) Int. Cl.: G06F 21/44, B41J 2/175, G03G 15/00, G03G 21/18, H04L 9/40, H04N 1/00, B41J 2/005, B41J 2/435

(54) **IMAGE FORMING DEVICE, CONTROL DEVICE, AUTHENTICATION METHOD AND CONSUMABLE**
BILDERZEUGUNGSVORRICHTUNG, STEUERUNGSVORRICHTUNG, AUTHENTIFIZIERUNGSVERFAHREN UND VERBRAUCHSMATERIAL
DISPOSITIF DE FORMATION D'IMAGE, DISPOSITIF DE COMMANDE, PROCÉDÉ D'AUTHENTIFICATION ET CONSOMMABLE

(30) Priority: 29.12.2023 CN 202311863134; 24.12.2024 CN 202411922111
(43) Date of publication of application: 02.07.2025
(73) Proprietor: Zhuhai Pantum Electronics Co., Ltd., Zhuhai, Guangdong (CN)
(72) Inventor: ZHANG, hao, Zhuhai, Guangdong, (CN); TIAN, yi, Zhuhai, Guangdong, (CN); GUO, hangbiao, Zhuhai, Guangdong, (CN); LUO, juncheng, Zhuhai, Guangdong, (CN)
(74) Representative: Sun, Yiming

(56) References cited:
- US-A1- 2015 007 273
- US-A1- 2016 173 284
- US-A1- 2020 127 821
- US-A1- 2023 367 250

## Description

### FIELD OF THE DISCLOSURE

The present application relates to the field of image forming technology, and in particular to an image forming device, a control device, an authentication method, and a consumable.

### BACKGROUND

Image forming device is a device that forms an image on a recording medium through the principle of image formation, such as a printer, a copier, a fax machine, a multifunctional image making and copying device, an electrostatic printing device, and any other similar device. An image forming device is usually equipped with replaceable items for accommodating image forming materials (such as ink, toner, etc.) that are convenient for users to replace, which are also referred to as consumables (such as ink cartridges, toner cartridges, imaging cartridges, etc.). These consumables are usually provided with control device such as consumable chips.

In order to ensure the availability of consumables, the image forming device usually needs to authenticate the consumable or the consumable chip before performing the image forming process. However, in the existing technology, the image forming device usually merely uses a fixed authentication scheme to authenticate the consumable or the consumable chip, which has a low degree of intelligence and limited application scenarios. There may be problems such as multiple authentication steps and complex authentication algorithms.

It should be noted that the information disclosed in the background section of the present disclosure is merely intended to deepen the understanding of the general background of the present disclosure, and should not be considered as an admission or suggestion in any form that the information constitutes existing technology already known to those skilled in the art.

Authentication methods involving an image forming device and consumables are known from the prior art.

US 2016/173284 A1 discloses a method to authenticate a consumable. A printer keeps a history of installed cartridges including their remaining life value. The history may be joined with those of other printers. If a cartridge is installed, its ID is matched against the history. If its current remaining life value is higher than the recorded one, the cartridge has been tampered with and authentication is denied. If the values match, the cartridge can be used immediately. US 2023/367250 A1 discloses an initialization method for a consumable memory storing lifetime information of the consumable. The initialization process involves writing information to the consumable memory that indicates that the lifetime information has been initialized. A device ID of the image forming apparatus may be stored in the consumable memory.

Methods for establishing mutual trust between entities are also known form the prior art.

US 2015/007273 A1 discloses a method for controlled resource access in an Internet of Things (IoT) network, involving a trust heuristic that may be based on a challenge-and-response mechanism used between an access requesting node and an authenticating node. Nodes may initially be assigned a default trust metric that may be subsequently increased for a correct response to a challenge or decreased in case of an incorrect response.

US 2020/127821 A1 discloses a method for establishing trust and a secured communication channel between entities. A trust level may be calculated from a set of trust levels of an entity. An entity may be verified based on at least a first and second trust level. A trust level may be set or updated, based on data provided, and may be sent or distributed to other nodes.

### SUMMARY

The present disclosure provides an image forming device, a control device, an authentication method, and a consumable, so as to solve the problems in the existing technology that the image forming device has a low intelligence level and limited application scenarios in authenticating consumable.

In a first aspect, an embodiment of the present disclosure provides an authentication method, and the method includes:
acquiring first intimacy information sent by an image forming device, where the first intimacy information is used to indicate a confidence level of the image forming device in a consumable;
acquiring second intimacy information, where the second intimacy information is used as a verification benchmark for the first intimacy information;
and outputting an intimacy verification result according to the first intimacy information and the second intimacy information, where the intimacy verification result is related to an authentication procedure of the consumable performed by the image forming device.

In a second aspect, an embodiment of the present disclosure provides a control device, and the control device includes
a first acquisition unit, configured to acquire first intimacy information sent by an image forming device, where the first intimacy information is used to indicate a confidence level of the image forming device in a consumable;
a second acquisition unit, configured to acquire second intimacy information, where the second intimacy information is used as a verification benchmark for the control device to verify the first intimacy information;
an intimacy verification unit, configured to obtain an intimacy verification result according to the first intimacy information and the second intimacy information;
and an output unit, configured to output the intimacy verification result, where the intimacy verification result is related to an authentication procedure of the consumable performed by the image forming device.

In a third aspect, an embodiment of the present disclosure provides an authentication method, which is applied to an image forming device, where a consumable is mounted on the image forming device, and a consumable chip is detachably mounted on the consumable. The method includes:
sending first intimacy information to the consumable chip so that the consumable chip outputs an intimacy verification result, where the first intimacy information is used to indicate a confidence level of the image forming device in the consumable;
acquiring the intimacy verification result output by the consumable chip;
and when the acquired intimacy verification result includes a first verification result, determining whether to execute an authentication procedure matching the first intimacy information based on the first verification result, where the first verification result is used to indicate that an error between the first intimacy information and the second intimacy information is within a predefined range.

In a fourth aspect, an embodiment of the present disclosure provides an image forming device, and the image forming device includes:
a second control unit, configured to execute the method described in the third aspect.

In a fifth aspect, an embodiment of the present disclosure provides a consumable, and the consumable includes:
a housing;
a developer accommodating portion, located in the housing, for accommodating the developer;
and a control device described in the first aspect.

In a sixth aspect, an embodiment of the present disclosure provides a consumable, and the consumable further includes:
a photosensitive drum;
a charging roller configured to charge the photosensitive drum;
and a control device described in the first aspect.

In the embodiments of the present disclosure, a corresponding authentication procedure can be matched for a consumable according to the intimacy information of the consumable, thereby ensuring the information security between the image forming device and the consumable chip and improving the intelligence of the image forming device in authenticating the consumable chip. This makes the authentication applicable to a wider range of application scenarios and solves the problem that, for example, the image forming device takes a long time to complete the entire authentication procedure and enter the ready state, thereby affecting the user experience due to the long time required for a user to wait for the print job to be output.

### BRIEF DESCRIPTION OF THE DRAWINGS

In order to more thoroughly illustrate the technical solutions of the embodiments of the present disclosure, the drawings essential for understanding the embodiments will be briefly introduced hereinafter. Apparently, the drawings described below are merely some embodiments of the present disclosure. For a person skilled in the art, other drawings can be obtained based on these drawings without creative efforts.
FIG. 1 is a schematic structural diagram of an image forming system in accordance with an embodiment of the present disclosure;
FIG. 2 is a schematic structural diagram of another image forming system in accordance with an embodiment of the present disclosure;
FIG. 3 is a flow chart of an authentication method in accordance with an embodiment of the present disclosure;
FIG. 4 is a flow chart of another authentication method in accordance with an embodiment of the present disclosure;
FIG. 5 is a flow chart of another authentication method in accordance with an embodiment of the present disclosure;
FIG. 6 is a flow chart of another authentication method in accordance with an embodiment of the present disclosure;
FIG. 7 is a flow chart of an intimacy updating method in accordance with an embodiment of the present disclosure;
FIG. 8 is a flow chart of another authentication method in accordance with an embodiment of the present disclosure;
FIG. 9 is a flow chart of another authentication method in accordance with an embodiment of the present disclosure;
FIG. 10 is a flow chart of another authentication method in accordance with an embodiment of the present disclosure;
FIG. 11 is a flow chart of another authentication method in accordance with an embodiment of the present disclosure;
FIG. 12 is a structural block diagram of a consumable chip in accordance with an embodiment of the present disclosure;
FIG. 13 is a structural block diagram of an image forming device in accordance with an embodiment of the present disclosure;
FIG. 14 is a schematic structural diagram of a consumable in accordance with an embodiment of the present disclosure;
FIG. 15 is a schematic structural diagram of another consumable in accordance with an embodiment of the present disclosure;
FIG. 16 is a schematic structural diagram of another consumable in accordance with an embodiment of the present disclosure; and
FIG. 17 is a schematic structural diagram of another consumable material in accordance with an embodiment of the present disclosure.

### DETAILED DESCRIPTION

In order to better understand the technical solutions of the present disclosure, the embodiments of the present disclosure are described in detail hereinafter with reference to the accompanying drawings.

It should be noted that the described embodiments are merely part of the embodiments, rather than all the embodiments of the present disclosure. Based on the embodiments in the present disclosure, all other embodiments obtained by a person skilled in the art without creative efforts are within the scope of protection of the present disclosure.

The terms used in the embodiments of the present disclosure are merely for the purpose of describing specific embodiments and are not intended to limit the present disclosure. The singular forms "a", "said", and "the" used in the embodiments of the present disclosure and the appended claims are also intended to include plural forms, unless the context clearly indicates other meanings.

It should be noted that the term "and/or" used in this specification is merely a description of the association relationship of associated objects, indicating that there can be three relationships. For example, A and/or B can represent: A exists alone, A and B exist at the same time, and B exists alone. In addition, the character "/" in the specification generally indicates that the associated objects therebefore and thereafter are in an "or" relationship.

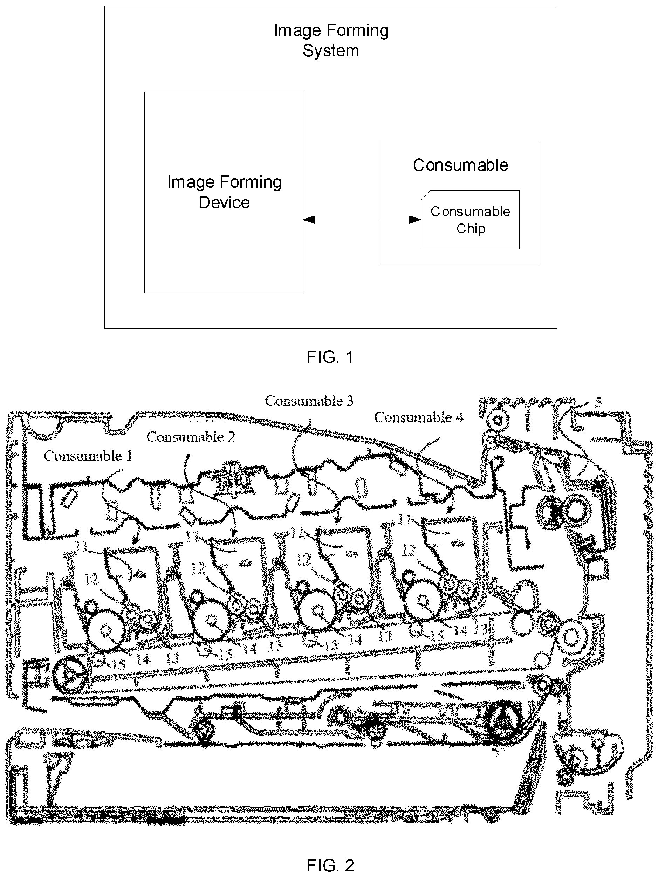

FIG. 1 illustrates a schematic structural diagram of an image forming system in accordance with an embodiment of the present disclosure. As shown in FIG. 1, the image forming system includes an image forming device and a consumable. The image forming device is a part of the image forming system that performs image forming processes, and the consumable is a replaceable accessory in the image forming system. For example, when the image forming device is an inkjet printer, a laser printer, a 3D printer, a label printer, or a dot matrix printer, the consumable is an ink cartridge, toner cartridge, toner cartridge, toner cartridge, ribbon cartridge, respectively. In one embodiment, the consumable includes a split structure, including a drum cartridge and a developer cartridge that are detachable from each other, where the drum cartridge includes a photosensitive drum and a charging roller, and the developer cartridge includes a developer accommodating portion, a developer roller, and a developer conveying element. In another embodiment, the consumable is an integrated structure, for example, the consumable includes a developer accommodating portion, a developer roller, a developer conveying element, a photosensitive drum, a charging roller, etc. Further, the consumable may also include merely a housing and a developer accommodating portion. It should also be noted that the consumable may also be the aforementioned developer cartridge or drum cartridge, where the developer accommodating portion is configured to contain developer such as carbon powder, and the developer conveying element is a component such as a powder conveying roller, a powder conveying screw, etc., for stirring and/or conveying carbon powder. Apparently, the developer cartridge may also merely include the developer accommodating portion, which is not limited in the disclosure. Further, the developer cartridge may also merely include the developer accommodating portion and the developer conveying element, which is not limited in the disclosure. In an optional embodiment, the consumable may also include a powder cylinder and/or an imaging component, and the powder cylinder is configured to convey carbon powder to the imaging component when the carbon powder contained in the imaging component is insufficient so that the image forming device forms an image based on the carbon powder conveyed by the imaging component. Here, when the consumable is a powder cylinder, the consumable may merely include a shell and a developer accommodating portion, or may include a shell, a developer accommodating portion, and a developer conveying element, which is not limited in the disclosure. When the consumable is an imaging component, the consumable may include a shell, a developer accommodating portion, a developer conveying element, a charging roller, a photosensitive drum, etc., and a developer transmission channel is provided between the developer accommodating portion and the imaging component, which is not limited in the disclosure.

It should be noted that the consumable mentioned in the embodiments of the present disclosure may also include other components, parts, units (such as paper boxes, etc.) in the image forming device that are easily damaged and need to be replaced, which also belong to the technical solutions corresponding to the consumable protected by the present disclosure.

To facilitate the management of a consumable, a consumable chip is usually provided on the consumable. The consumable chip is an electronic device with storage functions. Information about the consumable, such as the manufacturer, type, color, capacity, and usage of recording materials (toner, ink), etc., is stored in the consumable chip. Therefore, when a user installs the consumable into the host device, the information stored in the consumable chip can be provided to the host device so that the host device can know the basic information of the consumable. In addition, during the image forming process, the host device can also write the updated information of the consumable (e.g., the usage of recording material) into the consumable chip.

In one embodiment, the consumable chip of the embodiments of the present disclosure generally includes a board and a plurality of contact points, where the plurality of contact points are disposed on the board, and each contact point is respectively configured to electrically connect to one of a plurality of contact terminals disposed on the image forming device, thereby realizing communication between the image forming device and the consumable chip. The plurality of contact points may include a positive power supply (VCC) contact, a ground (GND) contact, a serial data line (SDA) contact, and a serial clock line (SCL) contact, etc.

In another embodiment, the consumable chip in the embodiments of the present disclosure may further include an adapter plate in addition to the board, where the adapter plate is electrically connected to the board, and at least part of the aforementioned multiple contact points may be disposed on the adapter plate.

Furthermore, the image forming device includes an image forming control unit and an image forming unit, where the image forming control unit is configured to control the image forming device as a whole, and the image forming unit is configured to form an image on a conveyed paper based on image data under the control of the image forming control unit.

The image forming control unit may be a system-on-chip (SoC), which is a miniature system composed of multiple components and is configured to control the imaging processing process of the image forming device, such as linear correction, noise reduction, bad pixel removal, detail enhancement, etc., to improve the quality of image output. The image forming control unit is also configured to perform processing processes related to data transmission and reception, command transmission and reception, and engine control of printing images, such as transmitting and receiving data, printing engine control commands, status, etc. through an interface unit (including but not limited to a USB port, a wired network port, a wireless network port, or other interfaces, etc.).

FIG. 2 illustrates a schematic structural diagram of another image forming system in accordance with an embodiment of the present disclosure. As shown in FIG. 2, the image forming unit of the image forming device may include a developer accommodating portion 11, a developing unit 12, a developer conveying element 13, a photosensitive unit 14, a transfer unit 15, and a fixing assembly 5, etc. A paper to be printed moves in the paper feeding direction, and after successively undergoing the powder feeding process of the developer conveying element 13 and the developing process of the developing unit 12, the paper reaches the clamping area between the photosensitive unit 14 and the transfer unit 15 for transfer, and then undergoes fixing through the fixing assembly 5 to complete the image forming process. The developer accommodating portion 11 is configured to accommodate the developer, where the developer may be a material such as toner or carbon powder. The developing unit 12 includes a developing roller and the like. The developer conveying element 13 includes a powder conveying roller and the like. The photosensitive unit 14 includes a photosensitive drum (e.g., organic photo conductor (OPC)) and a charging roller, etc., where the charging roller is configured to charge the photosensitive drum.

Typically, an image forming device is detachably mounted with at least one consumable. Taking the image forming device shown in FIG. 2 as an example, the image forming device is detachably mounted with four consumables, namely, consumable 1, consumable 2, consumable 3, and consumable 4 shown in FIG. 2. The four consumables are respectively configured to provide the image forming device with four colors of developers, namely, black K, cyan C, magenta M, and yellow Y. Apparently, In some embodiments, the number of consumables mounted on an image forming device may be increased or decreased, such as 5 or 6 or even more or less, which is not limited in the present disclosure.

In order to ensure the availability of a consumable, the image forming device usually needs to authenticate the consumable chip before executing the image forming job. For example, the default authentication procedure is S1+S2+S3+S4+S5+S6, which includes 6 authentication steps. It should be noted that the image forming device of the existing technology does not consider the usage of a consumable in the process of authenticating the consumable chip, but uses a fixed set of authentication steps to authenticate the consumable chip, which makes the authentication low in intelligence and limited in application scenarios. In some scenarios, it will cause problems such as too many authentication steps and overly complex authentication algorithms, which makes the image forming device take a long time to complete the authentication procedure and enter the ready state. This in turn causes a user to wait for a long time for the image forming job to be output, affecting the user experience. Here, the ready state refers to a state in which the image forming device can perform image forming processes. In other words, when the image forming device enters the ready state, the image forming device can immediately perform image forming processes after receiving the data to be printed.

To solve the above problems, the embodiments of the present disclosure provide an authentication scheme that can match a corresponding authentication procedure to a consumable chip according to the intimacy information of the consumable chip, so that the intelligent degree of authentication of the consumable chip by the image forming device is improved and meets the needs of different scenarios. Here, the authentication procedure refers to a process in which the image forming device executes a complete authentication strategy for the consumable chip. In this process, the image forming device can use different authentication processes or their combinations, execute the same authentication process different times, etc., to authenticate the consumable chip.

It can be understood that, since there is a corresponding relationship between the consumable chip and the consumable, the image forming apparatus authenticating the consumable chip may be understood as authenticating the consumable.

In particular, when the authentication procedure is complicated, for example, when there are many authentication steps or the authentication algorithm is complex, the image forming device will take a long time to complete the authentication procedure and enter the ready state, which will cause the user to wait for a long time for an image forming job to be output, affecting the user experience.

The embodiments of the present disclosure provide an authentication scheme that can match the corresponding authentication procedure to the consumable chip according to the intimacy information of the consumable chip, which can meet the needs of different application scenarios and improve the intelligent degree of authentication. For example, the time of the authentication procedure can be appropriately shortened while ensuring the information security between the image forming device and the consumable chip, solving the problem that the image forming device takes a long time to enter the ready state after completing the whole authentication procedure which affects the user experience due to the long time required for the user to wait for the print job to be output.

Exemplarily, the correspondence between the intimacy information and the authentication procedure is shown in Table 1.

**Table 1:**

| Intimacy information | Certification Procedure |
|---|---|
| 0 | S1+S2+S3+S4+S5+S6 |
| 1-10 | S1+S2+S3+S4+S5 |
| 10-30 | S1+S2+S3+S4 |
| 30-69 | S1+S2+S3 |
| 70-99 | S1+S2 |
| 100-150 | S1 |

As shown in Table 1, when the intimacy information is "0", the corresponding authentication procedure is "S1+S2+S3+S4+S5+S6"; when the intimacy information is "1-10", the corresponding authentication procedure is "S1+S2+S3+S4+S5"; when the intimacy information is "10-30", the corresponding authentication procedure is "S1+S2+S3+S4"; and so on. In other words, as the numerical value of the intimacy information increases, the authentication steps of the corresponding authentication procedure gradually decrease, or the complexity of the authentication algorithm gradually decreases. In some embodiments, when the intimacy information is "100-150", the authentication procedure may not be executed.

In the embodiments of the present disclosure, the larger the value of the intimacy information is, the higher the confidence level between the image forming device and the consumable chip is. For consumable chips with a relatively high confidence level, authentication using an authentication procedure with fewer authentication steps or lower algorithm complexity can shorten the authentication procedure. For consumable chips with a relatively low confidence level, authentication using an authentication procedure with more authentication steps or higher algorithm complexity can ensure the information security between the image forming device and the consumable chip.

It should be noted that, according to actual needs, those skilled in the art may also set the relationship between intimacy information and confidence level as follows: the smaller the value of the intimacy information, the higher the confidence level between the image forming device and the consumable chip, which is not limited in the present disclosure.

In some embodiments, in order to simplify the complexity of determining the authentication procedure between the image forming device and the consumable chip, the embodiments of the present disclosure can refer to the content shown in Table 1 and unify the authentication procedures corresponding to the intimacy information whose numerical values are within a certain range into a same authentication procedure. That is, the authentication procedures corresponding to the intimacy information whose numerical values are within a certain range are basically the same.

It should be noted that since there is a corresponding relationship between the consumable chip and the consumables, the authentication of the consumable chip by the image forming device can be understood as the authentication of the consumables, the confidence level between the image forming device and the consumable chip can be understood as the confidence level between the image forming device and the consumable, the confidence level of the image forming device in the consumable chip can be understood as the confidence level of the image forming device in the consumable, and the confidence level of the consumable chip in the image forming device can be understood as the confidence level of the consumables in the image forming device.

For ease of understanding, the technical solutions provided in the embodiments of the present disclosure are described in detail hereinafter in conjunction with specific embodiments.

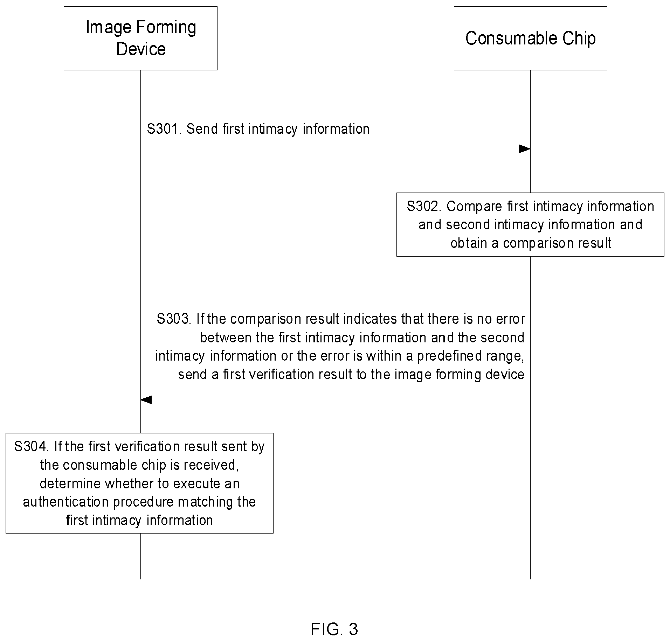

FIG. 3 is a flow chart of an authentication method in accordance with an embodiment of the present disclosure. The method can be applied to the image forming system shown in FIG. 1 and FIG. 2. As shown in FIG. 3, the method mainly includes the following steps.

Step S301: An image forming device sends first intimacy information to a consumable chip.

The intimacy information described in the embodiments of the present disclosure is used to indicate the confidence level between the image forming device and the consumable chip. Specifically, the intimacy information used to indicate the confidence level of the image forming device in the consumable chip is referred to as "first intimacy information", and the intimacy information used to indicate the confidence level of the consumable chip in the image forming device is referred to as "second intimacy information".

In general, the confidence level between the image forming device and the consumable chip is established based on the interaction process between the two. Normally, the confidence level of the image forming device in the consumable chip and the confidence level of the consumable chip in the image forming device should match each other. Based on the confidence level matching requirement between the two, it can be determined that the first intimacy information can also be used as a verification benchmark for matching of the image forming device with the second intimacy information corresponding to the consumable chip, and the second intimacy information can be used as a verification benchmark for matching of the consumable chip with the first intimacy information corresponding to the image forming device. That is, the first intimacy information is used as a verification benchmark for matching of the second intimacy information, and the second intimacy information is used as a verification benchmark for matching of the first intimacy information.

In one embodiment, the first intimacy information is used to compare with the second intimacy information, and the second intimacy information used to compare with the first intimacy information. It should be noted that the image forming device sends the first intimacy information to the consumable chip. Specifically, the image forming device may send the first intimacy information to the consumable chip directly through a communication line, or the image forming device may send the first intimacy information to the consumable chip indirectly through a relay or another device. The embodiments of the present disclosure do not limit the manner in which the image forming device sends the first intimacy information and the consumable chip obtains the first intimacy information, as it merely requires that the consumable chip can obtain the first intimacy information.

In actual applications, an image forming device may be equipped with a consumable, on which a consumable chip is mounted. An image forming device may also be equipped with multiple consumables, each of which is equipped with at least one consumable chip. An image forming device may also be equipped with a consumable, on which at least two consumable chips are mounted. In other words, an image forming device may communicate with one or more consumable chips. It should be noted that the image forming device may have different confidence level in each consumable chip, so that the first intimacy information corresponding to each consumable chip may be different. Therefore, in Step S301, the first intimacy information sent by the image forming device to a consumable chip is the first intimacy information corresponding to that consumable chip.

Step S302: The consumable chip obtains an intimacy verification result according to the first intimacy information and the second intimacy information.

In one embodiment, the consumable chip compares the first intimacy information and the second intimacy information to obtain an intimacy verification result.

In one embodiment, the second intimacy information is stored in a first predefined storage device. After receiving the first intimacy information, the consumable chip obtains the second intimacy information from the first predefined storage device, and then compares the first intimacy information with the second intimacy information to obtain a comparison result.

In one embodiment, the first predefined storage device stores the associated information of the second intimacy information. Before, after, or simultaneously with receiving the first intimacy information, the consumable chip determines the second intimacy information according to the associated information of the second intimacy information, and then compares the first intimacy information with the second intimacy information to obtain a comparison result.

It should be noted that the first predefined storage device in the embodiments of the present disclosure can be a storage device inside the consumable chip, or an external storage device electrically connected to the consumable chip, which is not limited in the present disclosure.

In other words, the embodiments of the present disclosure do not limit the manner in which the consumable chip obtains the second intimacy information. The consumable chip may obtain the second intimacy information directly from a predefined storage device, or the consumable chip may obtain the second intimacy information by calculation in a certain manner. The embodiments of the present disclosure do not limit the specific timing for the consumable chip to obtain the second intimacy information. The consumable chip may obtain the second intimacy information when the consumable chip obtains the first intimacy information, or obtain the second intimacy information before or after obtaining the first intimacy information.

In one embodiment, the first intimacy information and the second intimacy information may be subjected to a difference calculation to obtain a comparison result. For example, the first intimacy information is 80 and the second intimacy information is 85, and the comparison result obtained by performing a calculation of the difference between the first intimacy information and the second intimacy information is 5. It should be noted that in this embodiment, the closer the comparison result is to 0, the better the match between the first intimacy information and the second intimacy information.

In another embodiment, the first intimacy information and the second intimacy information may be ratio-calculated to obtain a comparison result. For example, the first intimacy information is 80 and the second intimacy information is 85. The comparison result obtained by ratio-calculating the first intimacy information and the second intimacy information is 0.94. It should be noted that in this embodiment, the closer the comparison result is to 1, the better the match between the first intimacy information with the second intimacy information.

In another embodiment, the first intimacy information and the second intimacy information may be calculated through exclusive OR (XOR) to obtain a comparison result. Exemplarily, the first intimacy information is 80, and the second intimacy information is 80. The comparison result obtained by XOR calculating the first intimacy information and the second intimacy information is all 0, that is, the first intimacy information is the same as the second intimacy information. It should be noted that in this embodiment, the consumable chip can determine the matching of the first intimacy information with the second intimacy information based on the result of the XOR process.

It should be noted that the consumable chip merely needs to obtain the intimacy verification result based on the first intimacy information and the second intimacy information, and the embodiments of the present disclosure do not limit the processing process therein. That is, the embodiments of the present disclosure do not limit the way in which the first intimacy information and the second intimacy information are compared, as long as the matching between the first intimacy information and the second intimacy information can be determined based on the comparison.

Step S303: If the comparison result indicates that an error between the first intimacy information and the second intimacy information is within a predefined range, the consumable chip sends a first verification result to the image forming device.

In the embodiments of the present disclosure, "the error between the first intimacy information and the second intimacy information is within the predefined range" can be understood as the first intimacy information and the second intimacy information are exactly the same, that is, there is no error, or the first intimacy information and the second intimacy information are not exactly the same, that is, there is an error between the first intimacy information and the second intimacy information, but the error is within the predefined range. Exemplarily, if the first intimacy information and the second intimacy information are both 80, it can be considered that there is no error between the first intimacy information and the second intimacy information. "There is an error between the first intimacy information and the second intimacy information and the error is within the predefined range" can be understood as although there is an error between the first intimacy information and the second intimacy information, the error between the two is small. In one example, the predefined range of the error is set to 10, the first intimacy information is 80, and the second intimacy information is 85. According to the difference calculation method, the comparison result of the first intimacy information and the second intimacy information is 5, then it is considered that the error between the first intimacy information and the second intimacy information is within the predefined range.

It should be noted that "the error between the first intimacy information and the second intimacy information is within a predefined range" indicates that the first intimacy information and the second intimacy information have a good match. In this scenario, the consumable chip can be authenticated according to an authentication procedure that matches the first intimacy information. Therefore, the consumable chip can send a first verification result to the image forming device to instruct the image forming device to determine whether to execute the authentication procedure that matches the first intimacy information.

Step S304: If the image forming device receives the first intimacy verification result output by the consumable chip, the image forming device determines whether to execute an authentication procedure matching the first intimacy information.

Specifically, after receiving the first verification result sent by the consumable chip, the image forming device can determine whether to execute the authentication procedure matching the first intimacy information according to the first verification result. Here, by executing the authentication procedure, it can be determined whether the consumable chip meets expectations. For example, it can be determined whether the consumable chip is a legal chip or an illegal chip.

Furthermore, after the image forming device receives the first intimacy verification result output by the consumable chip as the first verification result, in one embodiment, the image forming device can directly determine to execute the authentication procedure that matches the first intimacy information based on the first verification result. In another embodiment, when determining whether to execute the authentication procedure that matches the first intimacy information, in addition to based on the first verification result, it can also be determined in combination with the authentication results of other basic authentication procedures whether to execute the authentication procedure that matches the first intimacy information. For example, when the authentication result of a basic authentication procedure is that the authentication is passed, it is determined to execute the authentication procedure that matches the first intimacy information based on the first verification result. When the authentication result of the basic authentication procedure is that the authentication has failed, it is determined not to execute the authentication procedure that matches the first intimacy information.

Here, a basic authentication procedure is a technology well known to those skilled in the art, and those skilled in the art can configure the procedure according to actual needs, which is not limited in the disclosure.

Exemplarily, the correspondence between the intimacy information and the authentication procedure is shown in Table 1 above. If the first intimacy information is 125, which falls within the intimacy information range of 100-150, the authentication procedure executed is "S1". In other words, if the first intimacy information is 125, it means that the confidence level between the image forming device and the consumable chip is high, and the information security between the image forming device and the consumable chip has a decent confidence basis. In this scenario, in order to shorten the authentication procedure, an authentication procedure with fewer authentication steps or a simpler authentication algorithm can be used. If the first intimacy information is 8, which falls within the intimacy information range of 1-10, the authentication procedure executed is "S1+S2+S3+S4+S5". In other words, if the first intimacy information is 8, it means that the confidence level between the image forming device and the consumable chip is low, and there is no confidence basis between the image forming device and the consumable chip, or the confidence basis is weak. In this scenario, to ensure the information security between the image forming device and the consumable chip, an authentication procedure with more authentication steps or a more complex authentication algorithm can be used. In other words, the confidence level corresponding to the first intimacy information is negatively correlated with the execution time of the authentication procedure, that is, the lower the confidence level corresponding to the first intimacy information, the longer the execution time required to execute the authentication procedure, and the higher the confidence level corresponding to the first intimacy information, the shorter the execution time required to execute the authentication procedure.

In some embodiments, the confidence level corresponding to the first intimacy information is positively correlated with the execution time of the authentication procedure, that is, the lower the confidence level corresponding to the first intimacy information, the shorter the execution time required to execute the authentication procedure, and the higher the confidence level corresponding to the first intimacy information, the longer the execution time required to execute the authentication procedure.

It should also be noted that, in an embodiment of the present disclosure, if the authentication procedures corresponding to the various intimacy information whose numerical values are within a certain range can be the same authentication procedure, in such a scenario, the confidence level corresponding to the intimacy information is negatively correlated with the execution time of the authentication procedure. Specifically, the confidence level corresponding to the intimacy information whose numerical values are in different ranges is negatively correlated with the execution time of the corresponding authentication procedure. By way of example, the execution time of the authentication procedure corresponding to the intimacy information whose numerical value is within the first numerical range is T1, and the execution time of the authentication procedure corresponding to the intimacy information whose numerical value is within the second numerical range is T2, where the numerical value of the maximum intimacy information included in the second numerical range is greater than the numerical value of the maximum intimacy information included in the first intimacy range, and the first numerical range and the second numerical range do not overlap with each other. It can be determined that T2 is less than T1.

In summary, in the embodiments of the present disclosure, the corresponding authentication procedure can be matched for the consumable chip according to the intimacy information of the consumable chip, so as to appropriately shorten the time of the authentication procedure while ensuring the information security between the image forming device and the consumable chip. This solves the problem that the time required for the image forming device to complete the whole authentication procedure and enter the ready state is relatively long, and the user needs to wait for a long time to output the print job, which affects the user experience.

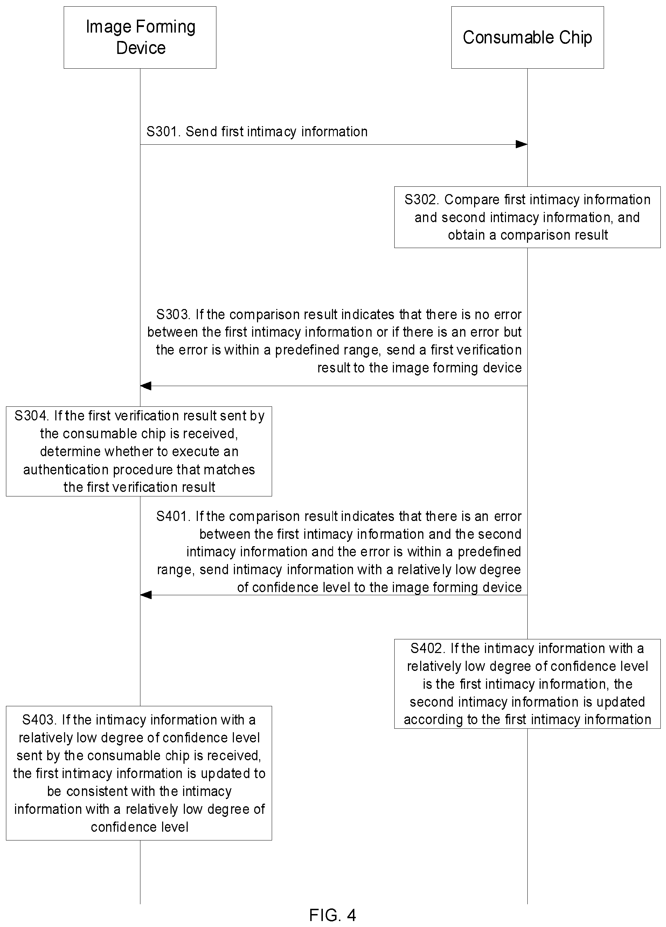

FIG. 4 is a flow chart of another authentication method in accordance with an embodiment of the present disclosure. As shown in FIG. 4, the method further includes the following steps based on the embodiments shown in FIG. 3.

Step S401: If there is an error between the first intimacy information and the second intimacy information and the error is within a predefined range, intimacy information with a relatively low degree of confidence level is sent to the image forming device. In an embodiment of the present disclosure, "intimacy information with a relatively low degree of confidence level" refers to the one of the first intimacy information and the second intimacy information that has a relatively low degree of confidence level. Exemplarily, if the degree of confidence level corresponding to the first intimacy information is lower than the degree of confidence level corresponding to the second intimacy information, the first intimacy information is sent to the image forming device. If the degree of confidence level corresponding to the second intimacy information is lower than the degree of confidence level corresponding to the first intimacy information, the second intimacy information is sent to the image forming device.

Step S402: If the intimacy information with a relatively low degree of confidence level is the first intimacy information, the second intimacy information is updated according to the first intimacy information.

Exemplarily, if the first intimacy information is 80 and the second intimacy information is 85 (assuming that the intimacy information is positively correlated with the confidence level), the intimacy information with a relatively low degree of confidence level is 80 (i.e., the first intimacy information), and the second intimacy information is updated from 85 to 80. Apparently, the second intimacy information can also be updated so that the error between the second intimacy information and the first intimacy information is reduced. Exemplarily, if the first intimacy information is 80 and the second intimacy information is 87 (assuming that the intimacy information is positively correlated with the confidence level), the intimacy information with a relatively low degree of confidence level is 80 (i.e., the first intimacy information), and the second intimacy information can be updated from 87 to 83, so that the error between the second intimacy information and the first intimacy information is reduced.

Step S403: If the intimacy information with a relatively low degree of confidence level sent by the consumable chip is received, the first intimacy information is updated to be consistent with the intimacy information with a relatively low degree of confidence level.

Exemplarily, if the first intimacy information is 80 and the second intimacy information is 75 (assuming that the intimacy information is positively correlated with the confidence level), the intimacy information with the relatively low confidence level is 75 (i.e., the second intimacy information), and the first intimacy information is updated from 80 to 75.

To summarize, in an embodiment of the present disclosure, if there is an error between the first intimacy information and the second intimacy information and the error is within a predefined range, the first intimacy information or the second intimacy information is aligned to the intimacy information with the relatively low confidence level to improve the matching of the first intimacy information with the second intimacy information.

It should be noted that those skilled in the art may also align the first intimacy information or the second intimacy information with the intimacy information with a relatively high degree of confidence level according to actual needs. However, aligning the first intimacy information or the second intimacy information with the intimacy information with a relatively low degree of confidence level is more conducive to ensuring the information security between the image forming device and the consumable chip.

It should be noted that the host device or consumable chip can update the intimacy by directly replacing the original intimacy information, or retaining the original intimacy information and storing the latest intimacy information in other storage units, or updating the intimacy by combining the original intimacy information with the part that needs to be changed (such as the difference between two pieces of intimacy information). The embodiments of the present disclosure do not limit how to update the intimacy, as long as there is a change in the numerical value and/or storage location of the intimacy information in the host device or consumable chip whose intimacy information needs to be updated.

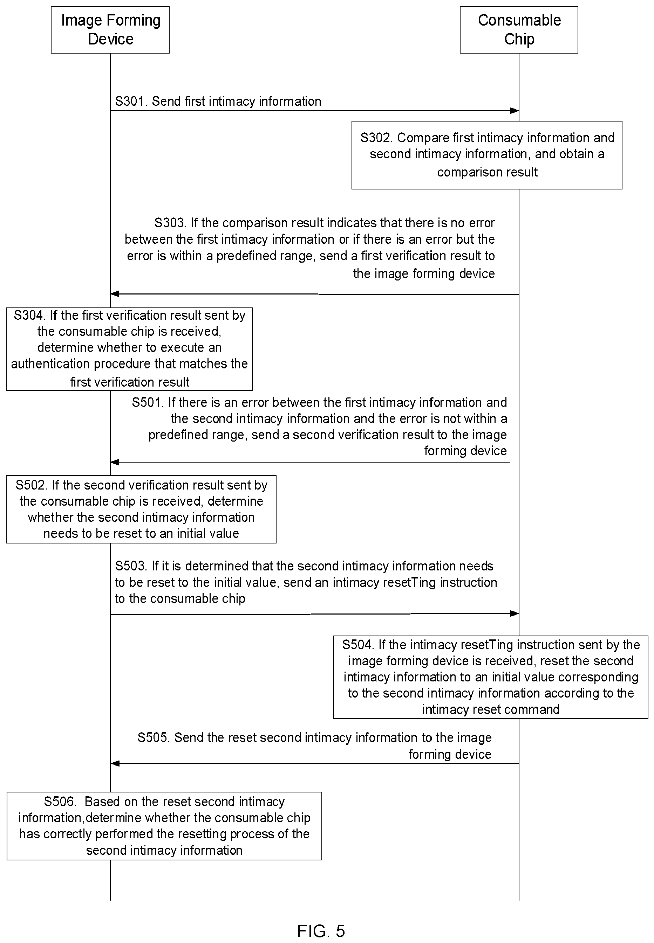

FIG. 5 is a flow chart of another authentication method in accordance with an embodiment of the present disclosure. As shown in FIG. 5, the method further includes the following steps based on the embodiment shown in FIG. 3.

Step S501: If there is an error between the first intimacy information and the second intimacy information and the error is not within a predefined range, a second verification result is sent to the image forming device.

Exemplarily, the predefined range of the error is set to 10, the first intimacy information is 80, and the second intimacy information is 50. If the comparison result of the first intimacy information and the second intimacy information is 30, it is considered that the error between the first intimacy information and the second intimacy information is not within the predefined range.

It should be noted that "there is an error between the first intimacy information and the second intimacy information and the error is not within the predefined range" indicates that the first intimacy information and the second intimacy information are poorly matched. In this scenario, the consumable chip may not meet expectations, so the second intimacy information needs to be reset so that the consumable chip can be authenticated based on the re-set second intimacy information. Therefore, the consumable chip can send a second verification result to the image forming device to instruct the image forming device to determine whether the second intimacy information needs to be reset to an initial value.

Step S502: If the second verification result sent by the consumable chip is received, determine whether the second intimacy information needs to be reset to an initial value.

In one embodiment, after receiving the second verification result sent by the consumable chip, the image forming device can directly determine that the second intimacy information needs to be reset to an initial value.

In one embodiment, after the image forming device receives the second verification result sent by the consumable chip, it needs to further determine whether the number of times that the second intimacy information is reset to the initial value is greater than or equal to a predefined threshold. If it is determined that the number of times that the second intimacy information is reset to the initial value is greater than or equal to the threshold, an error prompt message is output. If it is determined that the number of times that the second intimacy information is reset to the initial value is less than the threshold, it is determined that the second intimacy information needs to be reset to the initial value.

Exemplarily, the predefined threshold is 5 times. After the image forming device receives the second verification result sent by the consumable chip, if it is determined that the number of times that the second intimacy information is reset to the initial value has reached 5 times (i.e., greater than or equal to the predefined threshold), it means that the second intimacy information has been reset a large number of times. In this scenario, the consumable chip is likely to be unsatisfactory. At this moment, an error prompt message is output to prompt the user to check the consumable. If it is determined that the number of times that the second intimacy information is reset to the initial value is 2 times (i.e., less than the predefined threshold), it means that the second intimacy information has merely been reset a small number of times. This may be due to a communication error between the image forming device and the consumable chip or other reasons that cause the second intimacy information to be reset. Therefore, in this scenario, it can be determined to execute a program to reset the second intimacy information to the initial value.

Step S503: If it is determined that the second intimacy information needs to be reset to the initial value, an intimacy resetting instruction is sent to the consumable chip.

Specifically, if the image forming device determines that the second intimacy information needs to be reset to the initial value, an intimacy resetting instruction is sent to the consumable chip, where the intimacy resetting instruction is used to instruct to reset the second intimacy information to an initial value corresponding to the second intimacy information.

Step S504: If an intimacy resetting instruction sent by the image forming device is received, the second intimacy information is reset to an initial value corresponding to the second intimacy information according to the intimacy resetting instruction.

In one embodiment, the initial value corresponding to the second intimacy information is set to the intimacy information corresponding to the relatively low confidence level. In other words, the uncertain consumable chip is identified as an unsafe chip and is given the lowest confidence level. It should be noted that the use of this setting method can better ensure the communication security between the image forming device and the consumable chip. Exemplarily, assuming that the intimacy information is positively correlated with the confidence level, and the value range of the intimacy information is 0-150. The initial value corresponding to the second intimacy information can be set to a value between 0-10, that is, the initial value corresponding to the second intimacy information is set to the intimacy information corresponding to a relatively low confidence level.

In another embodiment, the initial value corresponding to the second intimacy information is set to the intimacy information corresponding to a relatively high degree of confidence level. In other words, the uncertain consumable chip is defaulted to a safe chip and is given the highest degree of confidence level. It should be noted that this setting method can better shorten the time of the authentication procedure. Exemplarily, assuming that the intimacy information is positively correlated with the degree of confidence level, and the value range of the intimacy information is 0-150. The initial value corresponding to the second intimacy information can be set to a value between 100-150, that is, the initial value corresponding to the second intimacy information is set to the intimacy information corresponding to a relatively high degree of confidence level.

In another embodiment, the initial value corresponding to the second intimacy information is set to the intimacy information corresponding to a medium confidence level. In other words, a neutral attitude is taken towards the uncertain consumable chip, and thus a medium confidence level is used. It should be noted that this setting method compromises "communication security between the image forming device and the consumable chip" and "shortening the time of the authentication procedure." Exemplarily, assuming that the intimacy information is positively correlated with the confidence level, and the value range of the intimacy information is 0-150. The initial value corresponding to the second intimacy information can be set to a value between 70-99, that is, the initial value corresponding to the second intimacy information is set to the intimacy information corresponding to the medium confidence level.

It should be noted that, since different application scenarios have different requirements for communication security and device response speed, technical personnel in this field can choose to set the initial value corresponding to the second intimacy information to intimacy information corresponding to a relatively low confidence level, intimacy information corresponding to a relatively high confidence level, or intimacy information corresponding to a medium confidence level according to the needs of the actual applications, which is not limited in the present disclosure.

Step S505: The consumable chip sends the reset second intimacy information to the image forming device.

Generally, a legal chip can correctly execute the intimacy resetting instruction sent by the image forming device. An illegal chip cannot correctly execute the intimacy resetting instruction sent by the image forming device. Therefore, after resetting the second intimacy information to the initial value corresponding to the second intimacy information according to the intimacy resetting instruction, the consumable chip sends the reset second intimacy information to the image forming device, so that the image forming device can determine, based on the reset second intimacy information, whether the consumable chip has correctly performed the reset process of the second intimacy information.

Step S506: The image forming device determines, based on the reset second intimacy information, whether the consumable chip has correctly performed the reset process of the second intimacy information.

Specifically, after receiving the reset second intimacy information sent by the consumable chip, the image forming device determines whether the consumable chip has correctly performed the reset process of the second intimacy information based on the reset second intimacy information. Exemplarily, the intimacy resetting instruction indicates that the second intimacy information is reset to 0. If the reset second intimacy information sent by the consumable chip received by the image forming device is 0, it is determined that the consumable chip has correctly performed the reset process of the second intimacy information. If the reset second intimacy information sent by the consumable chip is not 0, it is determined that the consumable chip has not correctly performed the reset process of the second intimacy information.

Furthermore, if it is determined that the consumable chip has correctly performed the reset process of the second intimacy information, the first intimacy information is reset to an initial value corresponding to the first intimacy information. Typically, the initial value corresponding to the first intimacy information and the initial value corresponding to the second intimacy information are the same, so that the first intimacy information and the second intimacy information are adjusted to a matching state.

If it is determined that the consumable chip has not correctly reset the second intimacy information, then return to Step S502 to re-determine whether to execute the procedure for resetting the second intimacy information to an initial value. It should be noted that if the second intimacy information fails to be reset multiple times, resulting in the second intimacy information being reset to the initial value for a number of times greater than or equal to the threshold, an error prompt message is output.

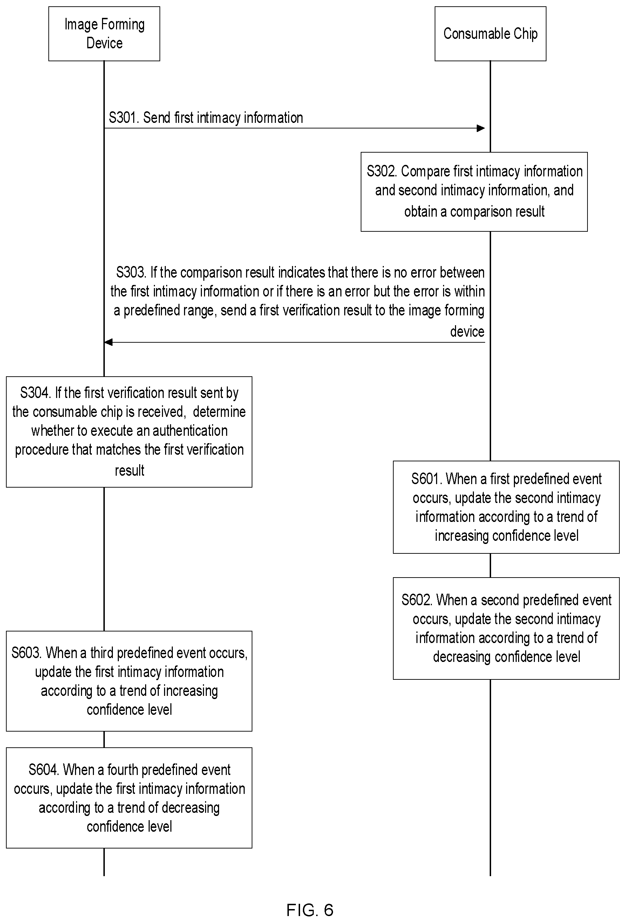

FIG. 6 is a flow chart of another authentication method in accordance with an embodiment of the present disclosure. As shown in FIG. 6, the method further includes the following steps based on the embodiment shown in FIG. 3.

Step S601: When a first predefined event occurs, the consumable chip updates the second intimacy information according to a trend of increasing confidence level.

In an embodiment of the present disclosure, the first predefined event may be a positive event occurring between the image forming device and the consumable chip (e.g., the consumable chip correctly responds to the image forming device). Based on the positive event, the consumable chip may improve the second intimacy information, that is, improve the confidence level of the consumable chip in the image forming device, so as to further shorten the time taken by the image forming device to authenticate the consumable chip.

In one embodiment, when a first predefined event occurs, the consumable chip updates the second intimacy information according to a predefined confidence level increasing gradient, and the confidence level increasing gradient can reflect the speed of increasing confidence level. For example, if the confidence level increasing gradient is 2, the second intimacy information is increased by 2 each time the first predefined event occurs. If the confidence level increasing gradient is 5, the second intimacy information is increased by 5 each time the first predefined event occurs. It should be noted that those skilled in the art can set the confidence level increasing gradient according to actual needs, which is not limited in the present disclosure.

Furthermore, to more reasonably adjust the second intimacy information according to the first predefined event, in one embodiment, different confidence level increasing gradients can be set for different first predefined events. For example, for a first predefined event A with a relatively high degree of importance, the confidence level increasing gradient can be set to 5; for a first predefined event B with a relatively low degree of importance, the confidence level increasing gradient can be set to 2. In other words, when a first predefined event A with a relatively high degree of importance occurs, a faster increasing speed is used to increase the confidence level corresponding to the second intimacy information. When a first predefined event B with a relatively low degree of importance occurs, a slower increasing speed is used to increase the confidence level corresponding to the second intimacy information.

Step S602: When a second predefined event occurs, the consumable chip updates the second intimacy information according to a trend of decreasing confidence level.

In an embodiment of the present disclosure, the second predefined event may be a negative event occurring between the image forming device and the consumable chip (e.g., an erroneous response of the consumable chip to the image forming device). Based on the negative event, the consumable chip may reduce the second intimacy information, that is, reduce the confidence level of the consumable chip in the image forming device, so as to further improve the communication security between the image forming device and the consumable chip.

In one embodiment, when the second predefined event occurs, the consumable chip updates the second intimacy information according to the predefined confidence level decreasing gradient, and the confidence level decreasing gradient can reflect the speed of decreasing confidence level. For example, if the confidence level decreasing gradient is 3, the second intimacy information is reduced by 3 each time the second predefined event occurs. If the confidence level decreasing gradient is 7, the second intimacy information is reduced by 7 each time the second predefined event occurs. It should be noted that those skilled in the art can set the confidence level decreasing gradient according to actual needs, which is not limited in the present disclosure.

Furthermore, to more reasonably adjust the second intimacy information according to the second predefined event, in one embodiment, different confidence level decreasing gradients can be set for different second predefined events. For example, for a second predefined event A with a relatively high degree of importance, the confidence level decreasing gradient can be set to 7; for a second predefined event B with a relatively low degree of importance, the confidence level decreasing gradient can be set to 3. That is, when a second predefined event A with a relatively high degree of importance occurs, a faster decreasing speed is used to reduce the confidence level corresponding to the second intimacy information; when a second predefined event B with a relatively low degree of importance occurs, a slower decreasing speed is used to reduce the confidence level corresponding to the second intimacy information.

Step S603: When a third predefined event occurs, the image forming device updates the first intimacy information according to a trend of increasing confidence level.

In the embodiments of the present disclosure, the third predefined event may be a positive event corresponding to the first predefined event. That is, when the first predefined event occurs, the third predefined event usually occurs with it, so that the first intimacy information and the second intimacy information keep increasing synchronously.

Furthermore, to ensure the matching of the updated first intimacy information and second intimacy information, the same confidence level increasing gradient is set for the first intimacy information and the second intimacy information. Exemplarily, the first intimacy information and the second intimacy information are both 80, and the confidence level increasing gradients corresponding to the first intimacy information and the second intimacy information are both set to 2. When the first predefined event occurs, the second intimacy information 80 is updated according to the predefined confidence level increasing gradient 2, and the updated second intimacy information is 82. When the third predefined event occurs, the first intimacy information 80 is updated according to the predefined confidence level increasing gradient 2, and the updated first intimacy information is 82. In other words, the updated first intimacy information and second intimacy information still have a high degree of matching.

Step S604: When a fourth predefined event occurs, the image forming device updates the first intimacy information according to a trend of decreasing confidence level.

In the embodiments of the present disclosure, the fourth predefined event may be a negative event corresponding to the second predefined event. That is, when the second predefined event occurs, the fourth predefined event occurs simultaneously, so that the first intimacy information and the second intimacy information keep decreasing synchronously.

Furthermore, to ensure the matching of the updated first intimacy information and second intimacy information, the same confidence level decreasing gradient is set for the first intimacy information and the second intimacy information. Exemplarily, the first intimacy information and the second intimacy information are both 80, and the confidence level decreasing gradients corresponding to the first intimacy information and the second intimacy information are both set to 3. When the second predefined event occurs, the second intimacy information 80 is updated according to the predefined confidence level decreasing gradient 3, and the updated second intimacy information is 77. When the fourth predefined event occurs, the first intimacy information 80 is updated according to the predefined confidence level decreasing gradient 3, and the updated first intimacy information is 77. In other words, the updated first intimacy information and second intimacy information still have a high degree of matching.

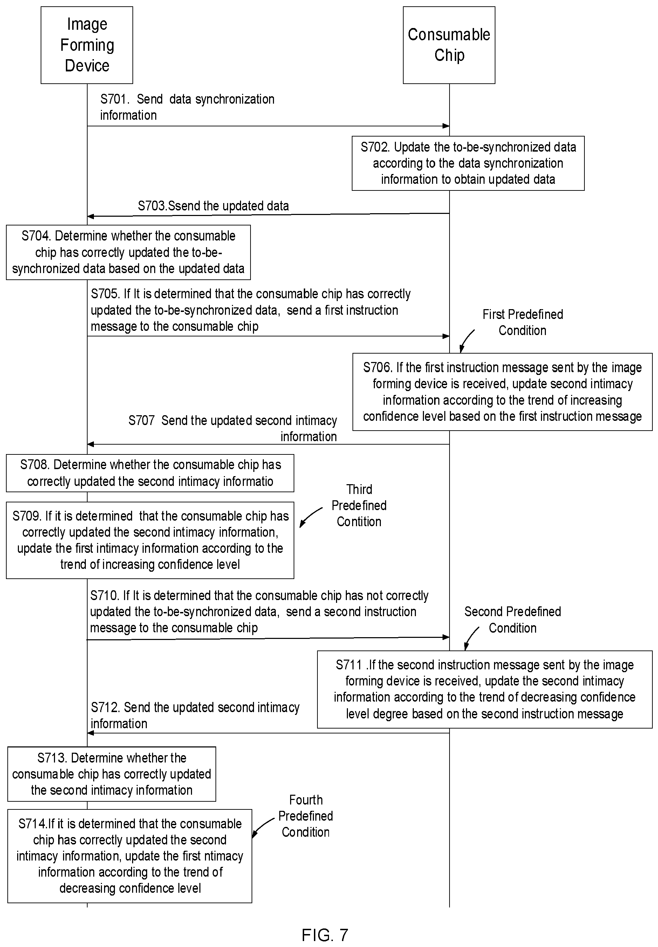

FIG. 7 is a flow chart of an intimacy updating method in accordance with an embodiment of the present disclosure. As shown in FIG. 7, the method mainly includes the following steps.

Step S701: The image forming device sends data synchronization information to the consumable chip.

Exemplarily, the data synchronization information may be information on the number of pages printed, information on the incremental numbers of pages printed, information on the remaining consumable(s), or other types of information, etc., which is not limited in the present disclosure.

Step S702: The consumable chip updates to-be-synchronized data according to the data synchronization information to obtain updated data.

In one embodiment, after obtaining the data synchronization information, the consumable chip can assign the data in the data synchronization information to the to-be-synchronized data to obtain the updated data. For example, the data synchronization information is 1000, the to-be-synchronized data is 800, and the updated data obtained after updating the to-be-synchronized data according to the data synchronization information is 1000.

In one embodiment, after obtaining the data synchronization information, the consumable chip can add the data synchronization information to the to-be-synchronized data to obtain the updated data. For example, the data synchronization information is 100, the to-be-synchronized data is 800, and the updated data obtained after updating the to-be-synchronized data according to the data synchronization information is 900.

It should be noted that those skilled in the art may also use other algorithms to update the to-be-synchronized data through data synchronization information, which is not limited in the present disclosure.

It should also be noted that the host device or consumable chip can update the to-be-synchronized data by directly replacing the original to-be-synchronized data, or retaining the original to-be-synchronized data and storing the latest updated data in other storage units, or updating the to-be-synchronized data by combining the original to-be-synchronized data with the part that needs to be changed (e.g., the difference portion to be synchronized). The embodiments of the present disclosure do not limit how to update the to-be-synchronized data, as long as there is a change in the numerical value and/or storage location of the to-be-synchronized data in the host device or consumable chip that needs to update the to-be-synchronized data.

Step S703: The consumable chip sends the updated data to the image forming device.

Specifically, after obtaining the updated data, the consumable chip sends the updated data to the image forming device, so that the image forming device determines whether the consumable chip has correctly updated the to-be-synchronized data based on the updated data.

Step S704: The image forming device determines whether the consumable chip has correctly updated the to-be-synchronized data based on the updated data.

Specifically, after receiving the updated data, the image forming device determines whether the updated data meets expectations. If the updated data meets expectations, it is determined that the consumable chip has correctly updated the to-be-synchronized data, and the process goes to Step S705. If the updated data does not meet expectations, it is determined that the consumable chip has not correctly updated the to-be-synchronized data, and the process goes to Step S710.

Exemplarily, the data synchronization information sent by the image forming device to the consumable chip is 1000, and according to the set data update rule, the expectation of the updated data should be 1000. If the updated data sent by the consumable chip to the image forming device is 1000, it means that the updated data meets the expectation, and it is determined that the consumable chip has correctly updated the to-be-synchronized data. If the updated data sent by the consumable chip to the image forming device is not 1000 (e.g., 700, 800, or another value), it means that the updated data does not meet the expectation, and it is determined that the consumable chip has not correctly updated the to-be-synchronized data.

Step S705: If the image forming device determines that the consumable chip has correctly updated the to-be-synchronized data, the image forming device sends a first instruction message to the consumable chip.

In the embodiments of the present disclosure, if the image forming device determines that the consumable chip has correctly updated the to-be-synchronized data, it means that the consumable chip has correctly responded to the instruction sent by the image forming device, that is, a positive event has occurred between the image forming device and the consumable chip. At this moment, a first instruction message is sent to the consumable chip, where the first instruction message is used to instruct the consumable chip to update the second intimacy information according to the trend of increasing confidence level.

Step S706: If the consumable chip receives the first instruction message sent by the image forming device, the consumable chip updates the second intimacy information according to the trend of increasing confidence level based on the first instruction message.

In the embodiments of the present disclosure, if the consumable chip receives the first instruction message sent by the image forming device, it means that a first predefined condition has been met, and the second intimacy information is updated according to the first instruction message in accordance with the trend of increasing confidence level. For the specific content of updating the second intimacy information in accordance with the trend of increasing confidence level, refer to the description of the embodiment shown in FIG. 6. For the sake of brevity, it will not be repeated here.

Step S707: The consumable chip sends the updated second intimacy information to the image forming device.

Specifically, after updating the second intimacy information, the consumable chip sends the updated second intimacy information to the image forming device, so that the image forming device determines whether the consumable chip has correctly updated the second intimacy information based on the updated second intimacy information.

Step S708: The image forming device determines whether the consumable chip has correctly updated the second intimacy information.

Specifically, after receiving the updated second intimacy information, the image forming device determines whether the updated second intimacy information meets expectations. If the updated second intimacy information meets expectations, it is determined that the consumable chip has correctly updated the second intimacy information and proceeds to Step S709. If the updated second intimacy information does not meet expectations, it is determined that the consumable chip has not correctly updated the second intimacy information.

Exemplarily, the expectation of the updated second intimacy information is 80. If the updated second intimacy information sent by the consumable chip to the image forming device is 80, it means that the updated second intimacy information meets expectations, and it is determined that the consumable chip has correctly updated the second intimacy information. If the updated second intimacy information sent by the consumable chip to the image forming device is 70, it means that the updated second intimacy information does not meet expectations, and it is determined that the consumable chip has not correctly updated the second intimacy information.

In one embodiment, if it is determined that the consumable chip has not correctly updated the second intimacy information, it means that the consumable chip has made an incorrect response to the instruction sent by the image forming device, that is, a negative event has occurred between the image forming device and the consumable chip. At this moment, it is possible to jump to Step S710, that is, to send a second instruction message to the consumable chip. The specific content of the second instruction message is described in detail below.

Step S709: If the image forming device determines that the consumable chip has correctly updated the second intimacy information, the first intimacy information is updated according to the trend of increasing confidence level.

In the embodiments of the present disclosure, if the image forming device determines that the consumable chip has correctly updated the second intimacy information, indicating that a third predefined condition has been met, the first intimacy information is updated according to the trend of increasing confidence level. For the specific content of updating the first intimacy information according to the trend of increasing confidence level, refer to the description of the embodiment shown in FIG. 6. For the sake of brevity, it will not be repeated here.

It should be noted that after the image forming device determines that the consumable chip has correctly updated the second intimacy information, updating the first intimacy information according to the trend of increasing confidence level can make the first intimacy information and the second intimacy information keep increasing synchronously, so as to maintain the matching of the first intimacy information with the second intimacy information.

Step S710: If the image forming device determines that the consumable chip has not correctly updated the to-be-synchronized data, the image forming device sends a second instruction message to the consumable chip.

In the embodiments of the present disclosure, if the image forming device determines that the consumable chip has not correctly updated the to-be-synchronized data, it means that the consumable chip has made an incorrect response to the instruction sent by the image forming device, that is, a negative event has occurred between the image forming device and the consumable chip. At this moment, a second instruction message is sent to the consumable chip, and the second instruction message is used to instruct the consumable chip to update the second intimacy information according to the trend of decreasing confidence level.

Step S711: If the consumable chip receives the second instruction message sent by the image forming device, the consumable chip updates the second intimacy information according to the trend of decreasing confidence level degree based on the second instruction message.

In the embodiments of the present disclosure, if the consumable chip receives the second instruction message sent by the image forming device, it means that the second predefined condition has been met, and the second intimacy information is updated according to the second instruction message in the trend of decreasing confidence level. For the specific content of updating the second intimacy information in the trend of decreasing confidence level, refer to the description of the embodiment shown in FIG. 6, and for the sake of brevity, it will not be repeated here.

Step S712: The consumable chip sends the updated second intimacy information to the image forming device.

Specifically, after updating the second intimacy information, the consumable chip sends the updated second intimacy information to the image forming device, so that the image forming device determines whether the consumable chip has correctly updated the second intimacy information based on the updated second intimacy information.

Step S713: The image forming device determines whether the consumable chip has correctly updated the second intimacy information.

Specifically, after receiving the updated second intimacy information, the image forming device determines whether the updated second intimacy information meets expectations. If the updated second intimacy information meets expectations, it is determined that the consumable chip has correctly updated the second intimacy information and proceeds to Step S714. If the updated second intimacy information does not meet expectations, it is determined that the consumable chip has not correctly updated the second intimacy information.

Exemplarily, the expectation of the updated second intimacy information is 80. If the updated second intimacy information sent by the consumable chip to the image forming device is 80, it means that the updated second intimacy information meets expectations, and it is determined that the consumable chip has correctly updated the second intimacy information. If the updated second intimacy information sent by the consumable chip to the image forming device is 85, it means that the updated second intimacy information does not meet expectations, and it is determined that the consumable chip has not correctly updated the second intimacy information.

Step S714: If the image forming device determines that the consumable chip has correctly updated the second intimacy information, the first intimacy information is updated according to the trend of decreasing confidence level.

In the embodiments of the present disclosure, if the image forming device determines that the consumable chip has correctly updated the second intimacy information, indicating that a fourth predefined condition has been met, the first intimacy information is updated according to the trend of decreasing confidence level. For the specific content of updating the first intimacy information according to the trend of decreasing confidence level, refer to the description of the embodiment shown in FIG. 6. For the sake of brevity, it will not be repeated here.

It should be noted that after the image forming device determines that the consumable chip has correctly updated the second intimacy information, updating the first intimacy information according to the trend of decreasing confidence level can make the first intimacy information and the second intimacy information keep decreasing synchronously, so as to maintain the matching of the first intimacy information with the second intimacy information.

It should also be noted that, in the embodiments of the present disclosure, in addition to determining whether to update the intimacy based on the correctness of the data synchronization process, the intimacy information can also be updated by, for example, utilizing the cumulative power-on times of the consumable chip and the usage of the consumable corresponding to the chip in the host device, such as the information about the numerical value of the cumulative number of printed pages. For example, when the cumulative power-on times of the consumable chip exceeds a predefined threshold or the cumulative number of printed pages corresponding to the consumable chip in the host device exceeds a predefined threshold, the intimacy information corresponding to the host device or the consumable chip is directly updated to an intimacy with a relatively high degree of confidence level, thereby further optimizing the time required for the authentication procedure between the host device and the consumable chip.

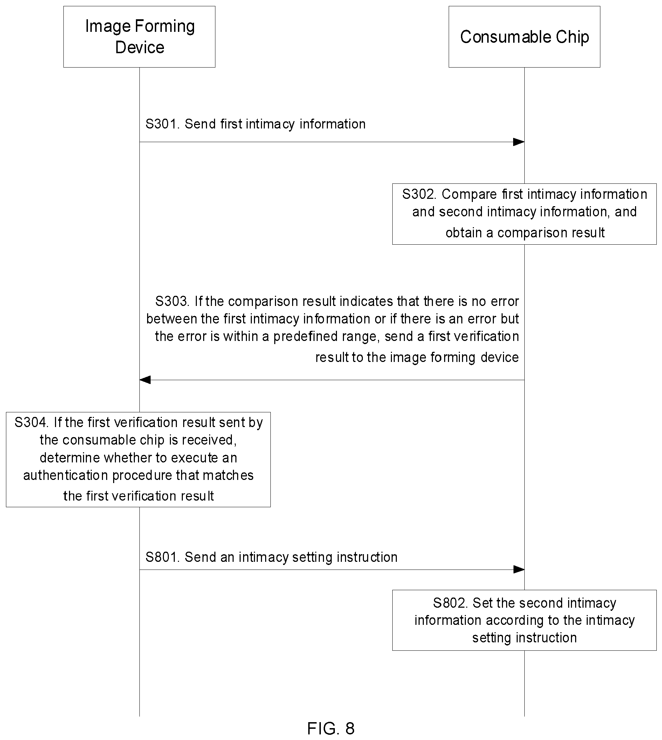

FIG. 8 is a flow chart of another authentication method in accordance with an embodiment of the present disclosure. As shown in FIG. 8, the method further includes the following steps based on the embodiment shown in FIG. 3.

Step S801: The image forming device sends an intimacy setting instruction to the consumable chip.

In an embodiment of the present disclosure, the intimacy setting instruction is used to instruct the consumable chip to set the second intimacy information to a corresponding intimacy value.

In one embodiment, the intimacy setting instruction may carry an intimacy value, and the intimacy setting instruction is used to instruct the consumable chip to set the second intimacy information to the intimacy value carried in the intimacy setting instruction.

In one embodiment, the intimacy setting instruction may also carry association information of the intimacy value, and the intimacy setting instruction is used to instruct the consumable chip to determine the intimacy value according to the association information of the intimacy value, and then set the second intimacy information to the determined intimacy value.

Step S802: The consumable chip sets the second intimacy information according to the intimacy setting instruction.

Specifically, after receiving the intimacy setting instruction, the consumable chip can set the second intimacy information to a corresponding intimacy value according to the intimacy setting instruction.

In one embodiment, the intimacy setting instruction carries an intimacy value, and after receiving the intimacy setting instruction, the consumable chip sets the second intimacy information to the intimacy value carried in the intimacy setting instruction.

In one embodiment, the intimacy setting instruction carries associated information of the intimacy value. After receiving the intimacy setting instruction, the consumable chip can determine the intimacy value based on the associated information of the intimacy value, and then set the second intimacy information to the determined intimacy value.

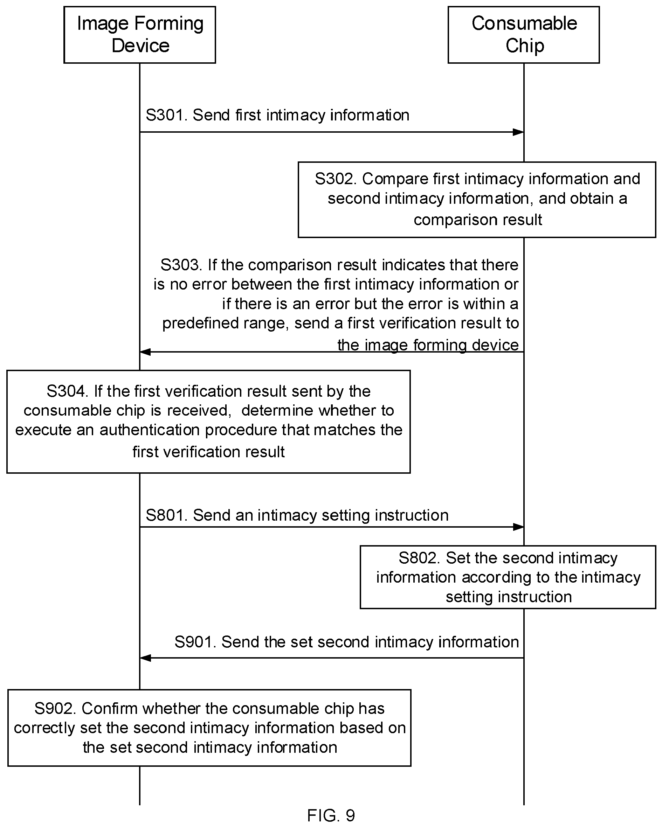

FIG. 9 is a flow chart of another authentication method in accordance with an embodiment of the present disclosure. As shown in FIG. 9, based on the embodiment shown in FIG. 8, the method further includes the following steps.

Step S901: The consumable chip sends the set second intimacy information to the image forming device.

Specifically, after setting the second intimacy information, the consumable chip sends the set second intimacy information to the image forming device, so that the image forming device determines whether the consumable chip has correctly updated the second intimacy information based on the set second intimacy information.

Step S902: The image forming device determines whether the consumable chip has correctly set the second intimacy information according to the set second intimacy information.

Specifically, after receiving the set second intimacy information, the image forming device determines whether the set second intimacy information meets expectations. If the set second intimacy information meets expectations, it is determined that the consumable chip has correctly set the second intimacy information. If the set second intimacy information does not meet expectations, it is determined that the consumable chip has not correctly set the second intimacy information.

Exemplarily, the expectation of the set second intimacy information is 80. If the set second intimacy information sent by the consumable chip to the image forming device is 80, it means that the set second intimacy information meets expectations, and it is determined that the consumable chip has correctly set the second intimacy information. If the set second intimacy information sent by the consumable chip to the image forming device is 85, it means that the set second intimacy information does not meet expectations, and it is determined that the consumable chip has not correctly set the second intimacy information.

In one embodiment, if the image forming device determines that the consumable chip has correctly set the second intimacy information, the second intimacy information is stored. If it is determined that the consumable chip has not correctly set the second intimacy information, the process jumps to Step S503, sends an intimacy resetting instruction to the consumable chip, and then executes subsequent Steps S504 to S506. For the specific contents of Steps S503 to S506, refer to the description of the embodiment shown in FIG. 5, which will not be repeated here for the sake of brevity.

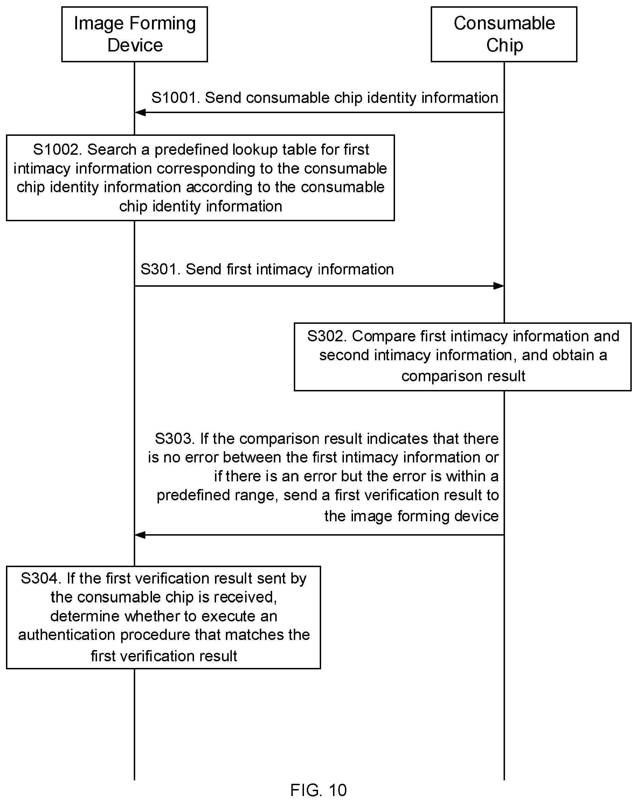

FIG. 10 is a flow chart of another authentication method in accordance with an embodiment of the present disclosure. As shown in FIG. 10, the method further includes the following steps before Step S301 shown in FIG. 3.

Step S1001: The consumable chip sends consumable chip identity information to the image forming device.

In one embodiment, after the image forming device is powered on, it is necessary to complete basic authentication with the consumable chip. During the basic authentication procedure, the image forming device can obtain the consumable chip identity information of the consumable chip.

It should be noted that, since there is a corresponding relationship between the consumable chip and the consumable, the consumable chip identity information can be used to indicate the identity information of the consumable, and the consumable chip may use the consumable chip identity information as the consumable identity information.

Step S1002: The image forming device searches a predefined lookup table for first intimacy information corresponding to the consumable chip identity information according to the consumable chip identity information.

In one embodiment, a lookup table is stored in a second predefined storage device. After acquiring the consumable chip identity information, the image forming device can search for the first intimacy information corresponding to the consumable chip identity information in the predefined lookup table according to the consumable chip identity information.

Specifically, the lookup table contains the association relationship between identity information of consumable chips and corresponding first intimacy information, and the first intimacy information corresponding to the consumable chip identity information can be determined according to the association relationship.

**Table 2:**

| Consumable chip identity information | First intimacy information |
|---|---|
| ABCD1234567890-AF1 | 80 |
| EFGH4567891234-AF1 | 30 |

It should be noted that if the consumable chip identity information obtained by the image forming device is "ABCD1234567890-AF1", then according to Table 2, it can be determined that the first intimacy information corresponding to the consumable chip identity information is 80. If the consumable chip identity information obtained by the image forming device is "EFGH4567891234-AF1", then according to Table 2, it can be determined that the first intimacy information corresponding to the consumable chip identity information is 30.

It should be noted that the second predefined storage device described in the embodiments of the present disclosure can be a storage device in the image forming device, or an external storage device electrically connected to the consumable chip, which is not limited in the present disclosure.

In one embodiment, the lookup table also includes second intimacy information corresponding to the consumable chip identity information, as shown in Table 3.

**Table 3:**

| Consumable chip identity information | First intimacy information | Second intimacy information |
|---|---|---|
| ABCD1234567890-AF1 | 80 | 85 |
| EFGH4567891234-AF1 | 30 | 30 |

It should be noted that the correspondence between the first intimacy information and the second intimacy information can be found in the above descriptions, and for the sake of brevity, it will not be repeated here.

In actual applications, if a consumable chip is used for the first time, the consumable chip identity information corresponding to the consumable chip may not exist in the lookup table, and thus the first intimacy information corresponding to the consumable chip identity information cannot be found in the predefined lookup table based on the consumable chip identity information. Therefore, after the image forming device obtains the consumable chip identity information of the consumable chip, based on the received consumable chip identity information, it needs to first determine whether the predefined lookup table contains the consumable chip identity information, and then execute subsequent steps. The specific process is described in detail below in conjunction with specific embodiments.

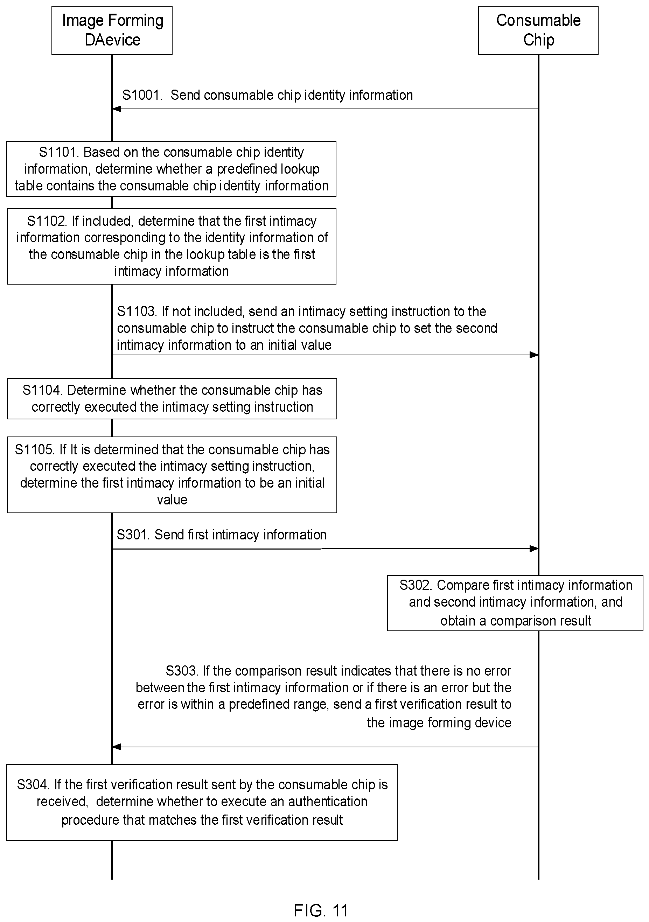

FIG. 11 is a flow chart of another authentication method in accordance with an embodiment of the present disclosure. As shown in FIG. 11, based on the embodiment shown in FIG. 10, Step S1002 specifically includes the following steps.

Step S1101: The image forming device determines whether a predefined lookup table contains the consumable chip identity information according to the consumable chip identity information.

In actual applications, if a consumable chip is used for the first time, the lookup table usually does not include the consumable chip identity information corresponding to the consumable chip and the first intimacy information corresponding to the consumable chip identity information. If the consumable chip is not used for the first time, the lookup table usually includes the consumable chip identity information corresponding to the consumable chip and the first intimacy information corresponding to the consumable chip identity information.

Specifically, if the image forming device determines that the predefined lookup table includes the consumable chip identity information, the process proceeds to Step S1102. If the image forming device determines that the predefined lookup table does not include the consumable chip identity information, the process proceeds to Step S1103.

Step S1102: If the consumable chip identity information is included in the lookup table, the image forming device determines that the first intimacy information corresponding to the identity information of the consumable chip in the lookup table is the first intimacy information.

It should be noted that if the lookup table contains the consumable chip identity information, the first intimacy information corresponding to the consumable chip identity information can be determined in the lookup table according to the consumable chip identity information. Exemplarily, if the consumable chip identity information obtained by the image forming device is "ABCD1234567890-AF1", then according to Table 2, it can be determined that the first intimacy information corresponding to the consumable chip identity information is 80. If the consumable chip identity information obtained by the image forming device is "EFGH4567891234-AF1", then according to Table 2, it can be determined that the first intimacy information corresponding to the consumable chip identity information is 30.

Step S1103: If the consumable chip identity information is not included in the lookup table, the image forming device sends an intimacy setting instruction to the consumable chip to instruct the consumable chip to set the second intimacy information to an initial value.

In the embodiments of the present disclosure, if the image forming device determines that the predefined lookup table does not contain the identity information of the consumable chip, it means that the consumable chip is used for the first time, and then the first intimacy information and the second intimacy information of the consumable chip need to be set. The intimacy setting instruction is then sent to the consumable chip to instruct the consumable chip to set the second intimacy information to an initial value. Exemplarily, the consumable chip identity information obtained by the image forming device is "IGKL0987654321 -AF1". Since the consumable chip identity information does not exist in the lookup table shown in Table 2, it is necessary to send an intimacy setting instruction to the consumable chip to instruct the consumable chip to set the second intimacy information to the initial value.

In one embodiment, the initial value corresponding to the second intimacy information is set to the intimacy information corresponding to a relatively low degree of confidence level. That is, the uncertain consumable chip is defaulted to an unsafe chip and is given the lowest degree of confidence level. It should be noted that this setting method can better ensure the communication security between the image forming device and the consumable chip. Exemplarily, assuming that the intimacy information is positively correlated with the degree of confidence level, and the value range of the intimacy information is 0-150. The initial value corresponding to the second intimacy information can be set to a value between 0-10, that is, the initial value corresponding to the second intimacy information is set to the intimacy information corresponding to a relatively low degree of confidence level.

In another embodiment, the initial value corresponding to the second intimacy information is set to the intimacy information corresponding to a relatively high degree of confidence level. In other words, the uncertain consumable chip is defaulted to a safe chip and is given the highest degree of confidence level. It should be noted that this setting method can better shorten the time of the authentication procedure. Exemplarily, assuming that the intimacy information is positively correlated with the degree of confidence level, and the value range of the intimacy information is 0-150. The initial value corresponding to the second intimacy information can be set to a value between 100-150, that is, the initial value corresponding to the second intimacy information is set to the intimacy information corresponding to a relatively high degree of confidence level.

In another embodiment, the initial value corresponding to the second intimacy information is set to the intimacy information corresponding to a medium confidence level. In other words, a neutral attitude is taken towards the uncertain consumable chip, and a medium confidence level is used. It should be noted that this setting method compromises "communication security between the image forming device and the consumable chip" and "shortening the time of the authentication procedure." Exemplarily, assuming that the intimacy information is positively correlated with the confidence level, and the value range of the intimacy information is 0-150. The initial value corresponding to the second intimacy information can be set to a value between 70-99, that is, the initial value corresponding to the second intimacy information is set to the intimacy information corresponding to a medium confidence level.

It should be noted that, since different application scenarios have different requirements for communication security and device response speed, technical personnel in this field can choose to set the initial value corresponding to the second intimacy information to intimacy information corresponding to a relatively low confidence level, intimacy information corresponding to a relatively high confidence level, or intimacy information corresponding to a medium confidence level according to the needs of the actual application scenario, which is not limited in the present disclosure.

In other embodiments of the present disclosure, the consumable chip identity information may also be the identity binding information generated by the image forming device for the consumable chip. There are four situations in which the consumable chip uses the identity binding information generated by the image forming device for the consumable chip as the consumable chip identity information:
Situation 1: When the consumable chip is used on an image forming device for the first time, the consumable chip has no corresponding identity binding information.

In S1001, the consumable chip sends consumable chip identity information to the image forming device specifically: the consumable chip sends the consumable chip identity information to the image forming device using the consumable chip factory identity information as the consumable chip identity information. In S1101, the image forming device determines whether a predefined lookup table contains the consumable chip identity information according to the consumable chip identity information, specifically: the image forming device cannot find the consumable chip factory identity information in the lookup table, and determines that the lookup table does not include the consumable chip factory identity information, or directly determines that the consumable chip is used on the current image forming device for the first time based on the consumable chip factory identity information, and determines that the lookup table does not include the consumable chip factory identity information.

The authentication method also includes: the image forming device generates identity binding information of the consumable chip, the image forming device sends an identity information setting instruction to the consumable chip, the identity information setting instruction includes the identity binding information, thereby instructing the consumable chip to set the identity binding information as the consumable chip identity information. In another possible implementation, the identity binding information may also be included in the intimacy setting instruction, and the intimacy setting instruction is also used to instruct the consumable chip to set the identity binding information as the consumable chip identity information.

Scenario 2: When the consumable chip is previously used on other image forming devices, the consumable chip uses the identity binding information generated by other image forming devices as the consumable chip identity information.

In S1001, the consumable chip sends consumable chip identity information to the image forming device specifically: the consumable chip sends the identity binding information generated by other image forming devices as the consumable chip identity information to the current image forming device. In S1101, the image forming device determines whether a predefined lookup table contains the consumable chip identity information according to the consumable chip identity information, specifically: the image forming device cannot find the identity information of the consumable chip in the lookup table, and determines that the lookup table does not include the identity information of the consumable chip, or directly determines that the identity information of the consumable chip is not generated by the image forming device according to the identity information of the consumable chip, and determines that the lookup table does not contain the factory identity information of the consumable chip. The authentication method also includes: the image forming device generates the identity binding information of the consumable chip, and the image forming device sends an identity information setting instruction to the consumable chip, and the identity information setting instruction includes the identity binding information, thereby instructing the consumable chip to set the identity binding information as the consumable chip identity information. That is, the identity binding information generated by other image forming devices is replaced with the identity binding information generated by the current image forming device. In another possible implementation, the identity binding information can also be included in the intimacy setting instruction, and the intimacy setting instruction is also used to instruct the consumable chip to set the identity binding information as the consumable chip identity information..

Scenario 3: The consumable chip was previously used on the current image forming device, and the consumable chip used the identity binding information generated by the current image forming device as the consumable chip identity information, but the consumable chip identity information of the consumable chip is not recorded in the lookup table of the current image forming device.

In S1001, the consumable chip sends consumable chip identity information to the image forming device specifically: the consumable chip uses the identity binding information generated by the current image forming device as the consumable chip identity information to send it to the current image forming device. In S1101, the image forming device determines whether a predefined lookup table contains the consumable chip identity information according to the consumable chip identity information, specifically: the image forming device cannot find the consumable chip identity information in the lookup table, and determines that the consumable chip identity information is not included in the lookup table. In actual applications, the memory of the image forming device is limited. When the memory occupied by the lookup table reaches the preset upper limit, at least part of the past records can be cleared. In this case, the image forming device cannot find the consumable chip identity information in the lookup table. The authentication method also includes: the image forming device generates identity binding information of the consumable chip, the image forming device sends an identity information setting instruction to the consumable chip, the identity information setting instruction includes identity binding information, thereby instructing the consumable chip to set the identity binding information as the consumable chip identity information. Thus, the consumable chip identity information is updated to the newly generated identity binding information. In another possible implementation, the identity binding information may also be included in the intimacy setting instruction, and the intimacy setting instruction is also used to instruct the consumable chip to set the identity binding information as the consumable chip identity information.

Scenario 4: The consumable chip was previously used on the current image forming device, and the consumable chip uses the identity binding information generated by the current image forming device as the consumable chip identity information, and the consumable chip identity information of the consumable chip is recorded in the lookup table of the current image forming device.

In S1001, the consumable chip sends consumable chip identity information to the image forming device specifically: the consumable chip sends the identity binding information generated by the current image forming device as the consumable chip identity information to the current image forming device. In S1101, the image forming device determines whether a predefined lookup table contains the consumable chip identity information according to the consumable chip identity information, specifically: the image forming device finds the consumable chip identity information in the lookup table, and determines that the consumable chip identity information is contained in the lookup table, then enters S1102, the image forming device determines that the first intimacy information corresponding to the identity information of the consumable chip in the lookup table is the first intimacy information..

Further, the image forming device can execute different identity binding information generation and setting strategies according to the needs of actual applications. For example, the image forming device can generate different identity binding information for different consumable chips to distinguish different consumable chips. For another example, the image forming device can generate new identity binding information for the same consumable chip at a preset time interval, which is used to continuously update the consumable chip identity information of the same consumable.

It should be noted that since there is a corresponding relationship between the consumable chip and the consumable, the consumable chip identity information can be used to indicate the identity information of the consumable.

Step S505: The consumable chip sends the reset second intimacy information to the image forming device.

Step S1104: The image forming device determines whether the consumable chip has correctly executed the intimacy setting instruction.

Specifically, after setting the second intimacy information to the initial value, the consumable chip can send the set second intimacy information to the image forming device, so that the image forming device can determine whether the consumable chip has correctly executed the intimacy setting instruction based on the set second intimacy information.

Exemplarily, the intimacy setting instruction indicates that the second intimacy information is set to 0. If the set second intimacy information sent by the consumable chip and received by the image forming device is 0, it is determined that the consumable chip has correctly performed the setting process of the second intimacy information. If the image forming device receives the set second intimacy information sent by the consumable chip is not 0, it is determined that the consumable chip has not correctly performed the setting process of the second intimacy information.

Step S1105: If the image forming device determines that the consumable chip has correctly executed the intimacy setting instruction, the first intimacy information is determined to be an initial value.

Furthermore, if it is determined that the consumable chip has correctly performed the setting process of the second intimacy information, the first intimacy information is set to the initial value corresponding to the first intimacy information. Typically, the initial value corresponding to the first intimacy information and the initial value corresponding to the second intimacy information are the same, so that the first intimacy information and the second intimacy information are adjusted to a matching state.

If it is determined that the consumable chip has not correctly performed the second intimacy information setting process, then return to Step S1103 to re-determine whether to execute the procedure for setting the second intimacy information to the initial value. It should be noted that if the second intimacy information fails to be set multiple times, resulting in the number of times, for setting the second intimacy information to the initial value, greater than or equal to the threshold, an error prompt message is output.

Further, after the first intimacy information and the second intimacy information are set, the consumable chip identity information, the first intimacy information and the second intimacy information can be stored in the lookup table. Exemplarily, the first intimacy information and the second intimacy information corresponding to the consumable chip identity information "IGKL0987654321 -AF1" are stored in the lookup table shown in Table 3, and the updated lookup table obtained is shown in Table 4.

**Table 4:**

| Consumable chip identity information | First intimacy information | Second intimacy information |
|---|---|---|
| ABCD1234567890-AF1 | 80 | 85 |
| EFGH4567891234-AF1 | 30 | 30 |
| IGKL0987654321 -AF1 | 0 | 0 |

It should be noted that the consumable chip obtains information sent by the image forming device, such as the first intimacy information, the data synchronization information, the first instruction message, second instruction message, and intimacy setting instruction, etc., and can directly receive the information sent by the image forming device, or obtain it from an external device such as a relay, that is, the external device such as the relay first receives the information sent by the image forming device, and then the consumable chip obtains the information sent by the image forming device from the external device such as the relay. The specific method of the consumable chip sending or outputting information to the image forming device, such as outputting intimacy verification result, updated data, second intimacy information, etc., can be to send information directly to the image forming device, or to forward information to the image forming device through an external device such as a relay, that is, the consumable chip first sends the information to an external device such as a relay, and then the external device sends the information to the image forming device.

Corresponding to the above embodiments, the embodiments of the present disclosure also provide a consumable chip.

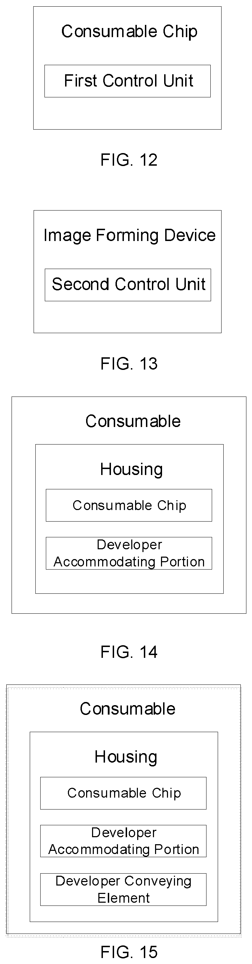

FIG. 12 is a block diagram of a consumable chip in accordance with an embodiment of the present disclosure. The consumable chip can be mounted on a consumable, and the consumable can be detachably mounted on an image forming device. As shown in FIG. 12, the consumable chip includes a first control unit, in a specific implementation, the first control unit may be an MCU, and the first control unit is configured to: acquire first intimacy information sent by the image forming device, where the first intimacy information is used to indicate the confidence level of the image forming device in the consumable chip; acquire second intimacy information, where the second intimacy information is used as a verification benchmark for matching of the first intimacy information; and output an intimacy verification result according to the first intimacy information and the second intimacy information, where the intimacy verification result is related to the authentication procedure of the consumable chip by the image forming device.

In one embodiment, the degree of confidence level corresponding to the first intimacy information is negatively correlated with the duration of the authentication procedure.

In one embodiment, the first control unit is configured to: compare the first intimacy information with the second intimacy information to obtain the intimacy verification result; when the error between the first intimacy information and the second intimacy information is within a predefined range, output a first intimacy verification result; and when the error between the first intimacy information and the second intimacy information is not within a predefined range, output a second intimacy verification result.

In one embodiment, the first control unit is configured to: if there is an error between the first intimacy information and the second intimacy information and the error is within a predefined range, and the confidence level corresponding to the first intimacy is lower than the confidence level corresponding to the second intimacy information, the second intimacy information is updated based on the first intimacy information.

In one embodiment, the first control unit is configured to: if there is an error between the first intimacy information and the second intimacy information and the error is within a predefined range, and the confidence level corresponding to the second intimacy is lower than the confidence level corresponding to the first intimacy information, the second intimacy information is output so that the image forming device updates the first intimacy information based on the second intimacy information.

In one embodiment, the second intimacy verification result is used to determine whether to reset the second intimacy information.

In one embodiment, the first control unit is configured to: output intimacy information corresponding to the intimacy resetting instruction based on the intimacy resetting instruction sent by the image forming device.

In one embodiment, the first control unit is configured to: when a first predefined event occurs, update the second intimacy information according to a trend of increasing confidence level; and when a second predefined event occurs, update the second intimacy information according to a trend of decreasing confidence level.

In one embodiment, the first control unit is configured to: according to the data synchronization information sent by the image forming device, output updated data corresponding to the data synchronization information, where the updated data is configured to trigger the first predefined event or the second predefined event.

In one embodiment, the first control unit is configured to: if a first instruction message is received, update the second intimacy information according to the trend of increasing confidence level, where the first instruction message is used to indicate that the consumable chip has correctly updated the to-be-synchronized data; and if a second instruction message is received, update the second intimacy information according to the trend of decreasing confidence level, where the second instruction message is used to indicate that the consumable chip has not correctly updated the to-be-synchronized data.

In one embodiment, the first control unit is configured to: output the updated second intimacy information, where the updated second intimacy information is used to determine whether the consumable chip has correctly updated the second intimacy information.

In one embodiment, the first control unit is configured to: set the second intimacy information according to an intimacy setting instruction sent by the image forming device.

In one embodiment, the first control unit is configured to: output the set second intimacy information, where the set second intimacy information is used to determine whether the second intimacy information has correctly set in the consumable chip.

In one embodiment, the first control unit is configured to: acquire the second intimate information from a first predefined storage device, or acquire the associated information of the second intimate information from the first predefined storage device, where the first predefined storage device is a storage device inside the consumable chip, or the first predefined storage device is an external storage device electrically connected to the consumable chip.

In one embodiment, the intimacy setting instruction further includes: an identity binding information; the first control unit is configured to set the identity binding information as the identity information of the consumable.

In one embodiment, the first control unit is configured to set the identity binding information as the identity information of the consumable according to the identity information setting instruction sent by the image forming device, wherein the identity information setting instruction includes identity binding information.

It should be noted that the specific details for implementing the embodiments of the present disclosure can refer to the description of the above method embodiments, and for the sake of brevity, these details will not be repeated here.

The present disclosure also provides a control device, including: a first acquisition unit, configured to acquire first intimacy information sent by an image forming device, where the first intimacy information is used to indicate the confidence level of the image forming device in the consumable chip; a second acquisition unit, configured to acquire second intimacy information, the second intimacy information being used as a verification benchmark for matching of the first intimacy information; an intimacy verification unit, configured to obtain an intimacy verification result according to the first intimacy information and the second intimacy information; and an output unit, configured to output the intimacy verification result, where the intimacy verification result is related to an authentication procedure of the consumable chip performed by the image forming device.

In one embodiment, the degree of confidence level corresponding to the first intimacy information is negatively correlated with the duration of the authentication procedure.

In one embodiment, the output unit is specifically configured to: when the error between the first intimacy information and the second intimacy information is within a predefined range, obtain a first intimacy verification result; and when the error between the first intimacy information and the second intimacy information is not within a predefined range, obtain a second intimacy verification result.

In one embodiment, the control device further includes: a first update unit, configured to update the second intimacy information based on the first intimacy information when there is an error between the first intimacy information and the second intimacy information and the error is within a predefined range, and when the confidence level corresponding to the first intimacy information is lower than the confidence level corresponding to the second intimacy information.

In one embodiment, the output unit is further configured to: if there is an error between the first intimacy information and the second intimacy information and the error is within a predefined range, and the confidence level corresponding to the second intimacy information is lower than the confidence level corresponding to the first intimacy information, output second intimacy information, so that the image forming device updates the first intimacy information based on the second intimacy information.

In one embodiment, the second intimacy verification result is used to determine whether to reset the second intimacy information.

In one embodiment, the output unit is further configured to: according to the intimacy resetting instruction sent by the image forming device, output intimacy information corresponding to the intimacy resetting instruction.

In one embodiment, the control device further includes: a second update unit, configured to update the second intimacy information according to a trend of increasing confidence level when a first predefined event occurs; and a third updating unit, configured to update the second intimacy information according to a trend of decreasing confidence level when a second predefined event occurs.

In one embodiment, the control device is configured to: according to the data synchronization information sent by the image forming device, output the updated data corresponding to the data synchronization information through the output unit, where the updated data is configured to trigger the first predefined event or the second predefined event.

In one embodiment, the second update unit is specifically configured to update the second intimacy information according to the trend of increasing confidence level if the control device receives the first instruction message, where the first instruction message is used to indicate that the control device has correctly updated the to-be-synchronized data; and the third updating unit is specifically configured to update the second intimacy information according to the trend of decreasing confidence level if the control device receives the second instruction message, where the second instruction message is used to indicate that the control device has not correctly updated the to-be-synchronized data.

In one embodiment, the output unit is further configured to: output updated second intimacy information, where the updated second intimacy information is used to determine whether the control device has correctly updated the second intimacy information.

In one embodiment, the control device further includes: a setting up unit, configured to set the second intimacy information according to the intimacy setting instruction sent by the image forming device.

In one embodiment, the output unit is further configured to: output the set second intimacy information, where the set second intimacy information is used to determine whether the control device has correctly set the second intimacy information.

In one embodiment, the second acquisition unit is specifically configured to: acquire the second intimate information from a first predefined storage device, or acquire associated information of the second intimate information from the first predefined storage device, where the first predefined storage device is a storage device inside the consumable chip, or the first predefined storage device is an external storage device electrically connected to the consumable chip.

In one embodiment, the intimacy setting instruction further includes: an identity binding information;wherein the control device further comprising: an identity setting unit, configured to set the identity binding information as the identity information of the consumable.

In one embodiment, the control device further comprising: an identity setting unit, configured to set the identity binding information as the identity information of the consumable according to the identity information setting instruction sent by the image forming device, wherein the identity information setting instruction includes identity binding information.

Specifically, in the embodiments of the present disclosure, the first acquisition unit, second acquisition unit, intimacy verification unit, output unit, first update unit, second update unit, third update unit, and setting up unit, identity setting unit may be implemented in software or in hardware, which is not limited in the present disclosure.

For example, the intimacy verification unit is implemented by hardware, for example, including an input unit, a logic comparison circuit, and an output unit, where the logic comparison circuit can be composed of logic units such as an AND gate circuit, an OR gate circuit, a NOT gate circuit, a trigger unit, and the like.

The first acquisition unit, second acquisition unit, output unit, first update unit, second update unit, third update unit, setting up unit and identity setting unit can be circuit units including devices such as field programmable gate array (FPGA), microcontroller unit (MCU), digital signal processor (DSP), etc. The output unit can also realize the function by building a specific waveform generator circuit, and the acquisition units and the setting up unit can also realize the corresponding functions by building a digital logic calculator, which is not limited in the present disclosure.

In one embodiment, at least one of the first acquisition unit, the second acquisition unit, the intimacy verification unit, the output unit, the first update unit, the second update unit, the third update unit, the setting up unit and the identity setting unit can be an external module outside the consumable chip and electrically connected to the consumable chip. That is, the consumable includes a consumable chip and an external module electrically connected to the consumable chip.

In one embodiment, the first acquisition unit, the second acquisition unit, the intimacy verification unit, the output unit, the first update unit, the second update unit, the third update unit, the setting up unit and the identity setting unit are not external modules outside the consumable chip or electrically connected to the consumable chip, but are directly included in the consumable chip.

In one embodiment, the first acquisition unit, second acquisition unit, intimacy verification unit, output unit, first update unit, second update unit, third update unit, setting up unit and the identity setting unit are included in a first control unit in the consumable chip.

In one embodiment, some of the first acquisition unit, the second acquisition unit, the intimacy verification unit, the output unit, the first update unit, the second update unit, the third update unit, the setting up unit and the identity setting unit are arranged in the consumable chip, and the remaining units are arranged in the first chip that communicates with the consumable chip. Preferably, the first acquisition unit, the second acquisition unit, the output unit and the identity setting unit are arranged in the consumable chip, and the intimacy verification unit, the first update unit, the second update unit, the third update unit and the setting unit are arranged in the first chip that communicates with the consumable chip. In some embodiments, the communication interface between the consumable chip and the first chip is a wired communication interface, preferably an I2C interface. In some embodiments, a switch controlled by the consumable chip is provided in the communication link between the consumable chip and the first chip and the image forming device. When the consumable chip determines that the first chip needs to communicate with the image forming device at the current stage, the communication link between the first chip and the image forming device is connected through the switch, or the communication link between the first chip and the image forming device is kept connected. When the consumable chip determines that the first chip needs to communicate with the image forming device at the current stage, the communication link between the first chip and the image forming device is connected through the switch. When the consumable chip determines that the first chip does not need to communicate with the image forming device at the current stage, the communication link between the first chip and the image forming device is disconnected through the switch.

It should be noted that due to the corresponding relationship between the consumable chip and the consumable, the various units of the control device can be set on the consumable chip, or be an external module electrically connected to the consumable chip, or be set in a first chip that communicates with the consumable chip. Therefore, the authentication of the consumable chip by the image forming device can be understood as the authentication of the consumable, the confidence level between the image forming device and the consumable chip can be understood as the confidence level between the image forming device and the consumable, the confidence level of the image forming device in the consumable chip can be understood as the confidence level of the image forming device in the consumable, and the confidence level of the consumable chip in the image forming device can be understood as the confidence level of the consumable in the image forming device.

Corresponding to the above embodiments, the embodiments of the present disclosure also provide a consumable.

A schematic structural diagram of a consumable in accordance with an embodiment of the present disclosure includes a housing; a developer accommodating portion located in the housing and configured to accommodate the developer; and a control device described in the above embodiments.

In one embodiment, the consumable also includes a developer conveying element for conveying the developer.

In one embodiment, the consumable also includes a photosensitive drum and a charging roller configured to charge the photosensitive drum.

In one embodiment, the consumable also includes a photosensitive drum; a charging roller configured to charge the photosensitive drum; and a control device described in the above embodiments.

It should be noted that the specific content of the control device can refer to the description of the above method embodiments, and for the sake of brevity, detail of which will not be repeated here.

FIG. 13 is a structural block diagram of an image forming device in accordance with an embodiment of the present disclosure. As shown in FIG. 13, the image forming device includes a second control unit, which is configured to execute part or all of the methods executed by the image forming device in the above method embodiments.

It should be noted that the specific contents involved in the embodiments of the present disclosure can refer to the description of the above method embodiments, and for the sake of brevity, detail of which will not be repeated here.

Corresponding to the above embodiments, the embodiments of the present disclosure further provide a consumable.

FIG. 14 is a schematic structural diagram of a consumable in accordance with an embodiment of the present disclosure. As shown in FIG. 14, the consumable includes a housing; a developer accommodating portion located in the housing for accommodating the developer; and a consumable chip described in the above embodiments.

FIG. 15 is a schematic structural diagram of another consumable in accordance with an embodiment of the present disclosure. As shown in FIG. 15, based on the embodiment shown in FIG. 14, the consumable further includes a developer conveying element for conveying developer.

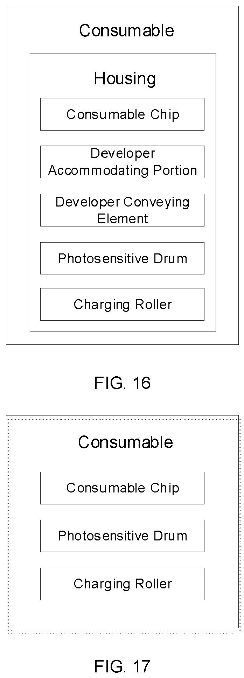

FIG. 16 is a schematic structural diagram of another consumable in accordance with an embodiment of the present disclosure. As shown in FIG. 16, based on the embodiment shown in FIG. 15, the consumable further includes a photosensitive drum and a charging roller configured to charge the photosensitive drum.

FIG. 17 is a schematic structural diagram of another consumable in accordance with an embodiment of the present disclosure. As shown in FIG. 17, the consumable includes a photosensitive drum; a charging roller configured to charge the photosensitive drum; and a consumable chip described in the above embodiments.

It should be noted that the specific contents of the consumable chips in the embodiments shown in FIGS. 14-17 can refer to the description of the above method embodiments, detail of which will not be repeated here for the sake of brevity.

Corresponding to the above embodiments, the embodiments of the present disclosure further provide an image forming system, which includes the consumable chip and image forming device described in the above embodiments, where the image forming device and the consumable chip are communicatively connected.

It should be noted that the specific contents involved in the embodiments of the present disclosure can refer to the description of the above method embodiments, and for the sake of brevity, detail of which will not be repeated here.

Corresponding to the above embodiments, the embodiments of the present disclosure further provide a computer-readable storage medium, where the computer-readable storage medium may store a program that, when executed, the device where the computer-readable storage medium is located may be controlled to perform some or all of the steps in the above method embodiments. In one embodiment, the computer-readable storage medium may be a floppy disk, an optical disk, a read-only memory (ROM), or a random-access memory (RAM).

Corresponding to the above embodiments, the embodiments of the present disclosure further provide a computer program product, which includes executable instructions. When the executable instructions are executed on a computer, the computer executes some or all the steps in the above method embodiments.

In the embodiments of the present disclosure, "at least one" refers to one or more, and "multiple" refers to two or more. "And/or" describes the association relationship of associated objects, indicating that three relationships may exist. For example, A and/or B may indicate that A exists alone, A and B exist at the same time, or B exists alone. A and B may be singular or plural. The character "/" generally indicates that the associated objects therebefore and thereafter are in an "or" relationship. "At least one of the following" and similar expressions refer to any combination of these items, including any combination of single or plural items. For example, at least one of a, b, and c may represent: a, b, c, ab, ac, bc, or abc, where a, b, c may be single or multiple.

Those of ordinary skill in the art will appreciate that the various units and algorithm steps described in the embodiments disclosed herein can be implemented in electronic hardware or a combination of computer software and electronic hardware. Whether these functions are performed in hardware or software depends on the specific application and design constraints of the technical solution. Professional and technical personnel can use different methods to implement the described functions for each specific application, but such embodiment should not be considered to be beyond the scope of the present disclosure.

Those skilled in the art can clearly understand that, for the convenience and brevity of description, the specific working processes of the systems, devices and units described above can refer to the corresponding processes in the method embodiments and will not be repeated here.

In some embodiments provided in the present disclosure, if any function is implemented in the form of a software functional unit and sold or used as an independent product, it can be stored in a computer-readable storage medium. Based on this understanding, the technical solutions of the present disclosure or essentially the part that contributes to the existing technology or the part of the technical solution can be embodied in the form of a software product, and the computer software product is stored in a storage medium, including a number of instructions to enable a computer device (which can be a personal computer, a server, or a network device, etc.) to perform all or part of the steps of the methods described in each embodiment of the present disclosure. The storage medium includes U disk, mobile hard disk, ROM, RAM, disk or optical disk and other media that can store program codes.

The foregoing description is merely some embodiments of the present disclosure. Any person skilled in the art can easily think of changes or substitutions within the technical scope disclosed in the present disclosure, which should be included in the protection scope of the present disclosure. The protection scope of the present disclosure should be based on the protection scope of the claims.

## Claims

1. An authentication method, comprising:
acquiring first intimacy information (S301) sent by an image forming device including a consumable, wherein the first intimacy information is used to indicate a confidence level of the image forming device in the consumable;
acquiring second intimacy information, wherein the second intimacy information is used as a verification benchmark (S302) for the first intimacy information and is used to indicate the confidence level of the consumable in the image forming device;
and
outputting an intimacy verification result (S303) according to the first intimacy information and the second intimacy information,
wherein the intimacy verification result is related to an authentication procedure of the consumable performed by the image forming device.

2. The authentication method according to claim 1, wherein a confidence level corresponding to the first intimacy information is negatively correlated with a duration of the authentication procedure.

3. The authentication method according to claim 1, wherein outputting the intimacy verification result according to the first intimacy information and the second intimacy information comprises:
comparing the first intimacy information with the second intimacy information to obtain the intimacy verification result;
when an error between the first intimacy information and the second intimacy information is within a predefined range, outputting a first intimacy verification result; and
when the error between the first intimacy information and the second intimacy information is not within the predefined range, outputting a second intimacy verification result;
wherein the second intimacy verification result is used to determine whether the image forming device resets the second intimacy information.

4. The authentication method according to claim 3, further comprising:
when there is an error between the first intimacy information and the second intimacy information and the error is within a predefined range, and a confidence level corresponding to the first intimacy is lower than a confidence level corresponding to the second intimacy information, updating the second intimacy information based on the first intimacy information; or
when there is an error between the first intimacy information and the second intimacy information and the error is within a predefined range, and a confidence level corresponding to the second intimacy is lower than a confidence level corresponding to the first intimacy information, outputting the second intimacy information so that the image forming device updates the first intimacy information based on the second intimacy information.

5. The authentication method according to claim 1, further comprising:
based on an intimacy resetting instruction sent by the image forming device, outputting intimacy information corresponding to the intimacy resetting instruction.

6. The authentication method according to claim 1, further comprising:
when a first predefined event occurs, updating the second intimacy information according to a trend of increasing confidence level;
when a second predefined event occurs, updating the second intimacy information according to a trend of decreasing confidence level; and
outputting the updated second intimacy information, wherein the updated second intimacy information is used to determine whether the second intimacy information has been correctly updated.

7. The authentication method according to claim 6, further comprising:
according to data synchronization information sent by the image forming device, outputting updated data corresponding to the data synchronization information, wherein the updated data is used to trigger the first predefined event or the second predefined event;
when a first instruction message is received, updating the second intimacy information according to the trend of increasing confidence level, wherein the first instruction message is used to indicate that to-be-synchronized data has been correctly updated; and
when a second instruction message is received, updating the second intimacy information according to the trend of decreasing confidence level, wherein the second instruction message is used to indicate that the to-be-synchronized data has not been correctly updated.

8. The authentication method according to claim 1, further comprising:
setting up the second intimacy information according to an intimacy setting instruction sent by the image forming device; and
outputting the set second intimacy information, wherein the set second intimacy information is used to confirm whether the second intimacy information has been correctly set.

9. The authentication method according to claim 8, further comprising:
setting an identity binding information as an identity information of the consumable; wherein the identity binding information is included in the intimacy setting instruction, or the identity binding information is included in an identity information setting instruction sent by the image forming device.

10. A control device, comprising:
a first acquisition unit, configured to acquire first intimacy information sent by an image forming device including a consumable, wherein the first intimacy information is used to indicate a confidence level of the image forming device in the consumable;
a second acquisition unit, configured to acquire second intimacy information, wherein the second intimacy information is used as a verification benchmark for a control device to verify the first intimacy information, and is used to indicate the confidence level of the consumable in the image forming device;
an intimacy verification unit, configured to obtain an intimacy verification result according to the first intimacy information and the second intimacy information; and
an output unit, configured to output the intimacy verification result,
wherein the intimacy verification result is related to an authentication procedure of the consumable chip performed by the image forming device.

11. The control device according to claim 10, wherein a confidence level corresponding to the first intimacy information is negatively correlated with a duration of the authentication procedure.

12. The control device according to claim 10, wherein the output unit is further configured to:
when an error between the first intimacy information and the second intimacy
information is within a predefined range, obtain a first intimacy verification result; and
when the error between the first intimacy information and the second intimacy
information is not within the predefined range, obtain a second intimacy verification result;
wherein the second intimacy verification result is used to determine whether the image forming device resets the second intimacy information.

13. The control device according to claim 12, wherein the control device further comprises:
a first update unit, configured to update the second intimacy information based on the first intimacy information when there is an error between the first intimacy information and the second intimacy information and the error is within the predefined range, and when a confidence level corresponding to the first intimacy is lower than a confidence level corresponding to the second intimacy information;and
wherein the output unit is further configured to when there is an error between the first intimacy information and the second intimacy information and the error is within the predefined range, and when the confidence level corresponding to the second intimacy is lower than the confidence level corresponding to the first intimacy information, output the second intimacy information so that the image forming device updates the first intimacy information based on the second intimacy information.

14. The control device according to claim 10, wherein the output unit is further configured to:
based on an intimacy resetting instruction sent by the image forming device, output intimacy information corresponding to the intimacy resetting instruction.

15. The control device according to claim 10, further comprising:
a second update unit, configured to update the second intimacy information according to a trend of increasing confidence level when a first predefined event occurs;
a third updating unit, configured to update the second intimacy information according to a trend of decreasing confidence level when a second predefined event occurs;and
the output unit is further configured to output the updated second intimacy information, wherein the updated second intimacy information is used to determine whether the control device has correctly updated the second intimacy information.

16. The control device according to claim 15, wherein the control device is configured to:
according to data synchronization information sent by the image forming device, output updated data corresponding to the data synchronization information through the output unit, wherein the updated data is used to trigger the first predefined event or the second predefined event;
the second update unit is further configured to update the second intimacy information according to the trend of increasing confidence level when the control device receives a first instruction message, wherein the first instruction message is used to indicate that the control device has correctly updated to-be-synchronized data; and
the second update unit is further configured to update the second intimacy information according to the trend of decreasing confidence level when the control device receives a second instruction message, wherein the second instruction message is used to indicate that the control device has not correctly updated the to-be-synchronized data.

17. The control device according to claim 10, further comprising:
a setting up unit, configured to set the second intimacy information according to intimacy setting instruction sent by the image forming device; and
the output unit is further configured to: output the set second intimacy information, wherein the set second intimacy information is used to confirm whether the control device has correctly set the second intimacy information.

18. The control device according to claim 17, further comprising:
an identity setting unit, configured to set an identity binding information as the identity information of the consumable;
wherein the identity binding information is included in the intimacy setting instruction, or the identity binding information is included in an identity information setting instruction sent by the image forming device.

19. A consumable, comprising:
a housing;
a developer accommodating portion (11), located in the housing, for accommodating a developer; and
a control device according to any one of claims 10 to 18.

20. The consumable according to claim 19, further comprising:
a developer conveying element (13), configured for conveying the developer.

21. The consumable according to claim 20, further comprising:
a photosensitive drum; and
a charging roller, configured to charge the photosensitive drum.

22. A consumable, comprising:
a photosensitive drum;
a charging roller, configured to charge the photosensitive drum; and
a control device according to any one of claims 10 to 18.

## Patentansprüche

1. Ein Authentifizierungsverfahren, umfassend:
Erfassen einer ersten Vertrautheitsinformation (S301), die von einer Bilderzeugungsvorrichtung gesendet wird, die ein Verbrauchsmaterial umfasst, wobei die erste Vertrautheitsinformation dazu verwendet wird, einen Vertrauensgrad der Bilderzeugungsvorrichtung in das Verbrauchsmaterial anzuzeigen;
Erfassen einer zweiten Vertrautheitsinformation, wobei die zweite Vertrautheitsinformation als ein Verifikationsmaßstab (S302) für die erste Vertrautheitsinformation verwendet wird und dazu verwendet wird, den Vertrauensgrad des Verbrauchsmaterials in der Bilderzeugungsvorrichtung anzuzeigen;
und
Ausgeben eines Vertrautheitsverifikationsergebnisses (S303) gemäß der ersten Vertrautheitsinformation und der zweiten Vertrautheitsinformation,
wobei das Vertrautheitsverifikationsergebnis mit einem von der Bilderzeugungsvorrichtung durchgeführten Authentifizierungsverfahren des Verbrauchsmaterials in Beziehung steht.

2. Das Authentifizierungsverfahren nach Anspruch 1, wobei ein der ersten Vertrautheitsinformation entsprechender Vertrauensgrad negativ mit einer Dauer des Authentifizierungsverfahrens korreliert ist.

3. Das Authentifizierungsverfahren nach Anspruch 1, wobei das Ausgeben des Vertrautheitsverifikationsergebnisses gemäß der ersten Vertrautheitsinformation und der zweiten Vertrautheitsinformation Folgendes umfasst:
Vergleichen der ersten Vertrautheitsinformation mit der zweiten Vertrautheitsinformation, um das Vertrautheitsverifikationsergebnis zu erhalten;
wenn ein Fehler zwischen der ersten Vertrautheitsinformation und der zweiten Vertrautheitsinformation innerhalb eines voreingestellten Bereichs liegt, Ausgeben eines ersten Vertrautheitsverifikationsergebnisses; und
wenn der Fehler zwischen der ersten Vertrautheitsinformation und der zweiten Vertrautheitsinformation nicht innerhalb des voreingestellten Bereichs liegt, Ausgeben eines zweiten Vertrautheitsverifikationsergebnisses;
wobei das zweite Vertrautheitsverifikationsergebnis dazu verwendet wird, zu bestimmen, ob die Bilderzeugungsvorrichtung die zweite Vertrautheitsinformation zurücksetzt.

4. Das Authentifizierungsverfahren nach Anspruch 3, ferner umfassend:
wenn ein Fehler zwischen der ersten Vertrautheitsinformation und der zweiten Vertrautheitsinformation besteht und der Fehler innerhalb eines voreingestellten Bereichs liegt, und ein der ersten Vertrautheitsinformation entsprechender Vertrauensgrad niedriger ist als ein der zweiten Vertrautheitsinformation entsprechender Vertrauensgrad, Aktualisieren der zweiten Vertrautheitsinformation auf der Grundlage der ersten Vertrautheitsinformation; oder
wenn ein Fehler zwischen der ersten Vertrautheitsinformation und der zweiten Vertrautheitsinformation besteht und der Fehler innerhalb eines voreingestellten Bereichs liegt, und ein der zweiten Vertrautheitsinformation entsprechender Vertrauensgrad niedriger ist als ein der ersten Vertrautheitsinformation entsprechender Vertrauensgrad, Ausgeben der zweiten Vertrautheitsinformation, so dass die Bilderzeugungsvorrichtung die erste Vertrautheitsinformation auf der Grundlage der zweiten Vertrautheitsinformation aktualisiert.

5. Das Authentifizierungsverfahren nach Anspruch 1, ferner umfassend:
auf der Grundlage einer von der Bilderzeugungsvorrichtung gesendeten Vertrautheitsrücksetzanweisung, Ausgeben einer der Vertrautheitsrücksetzanweisung entsprechenden Vertrautheitsinformation.

6. Das Authentifizierungsverfahren nach Anspruch 1, ferner umfassend:
wenn ein erstes voreingestelltes Ereignis auftritt, Aktualisieren der zweiten Vertrautheitsinformation gemäß einem Trend eines steigenden Vertrauensgrads;
wenn ein zweites voreingestelltes Ereignis auftritt, Aktualisieren der zweiten Vertrautheitsinformation gemäß einem Trend eines sinkenden Vertrauensgrads; und
Ausgeben der aktualisierten zweiten Vertrautheitsinformation, wobei die aktualisierte zweite Vertrautheitsinformation dazu verwendet wird, zu bestimmen, ob die zweite Vertrautheitsinformation korrekt aktualisiert worden ist.

7. Das Authentifizierungsverfahren nach Anspruch 6, ferner umfassend:
gemäß einer von der Bilderzeugungsvorrichtung gesendeten Datensynchronisationsinformation, Ausgeben aktualisierter Daten, die der Datensynchronisationsinformation entsprechen, wobei die aktualisierten Daten dazu verwendet werden, das erste voreingestellte Ereignis oder das zweite voreingestellte Ereignis auszulösen;
wenn eine erste Anweisungsnachricht empfangen wird, Aktualisieren der zweiten Vertrautheitsinformation gemäß dem Trend des steigenden Vertrauensgrads, wobei die erste Anweisungsnachricht dazu verwendet wird, anzuzeigen, dass zu synchronisierende Daten korrekt aktualisiert worden sind; und
wenn eine zweite Anweisungsnachricht empfangen wird, Aktualisieren der zweiten Vertrautheitsinformation gemäß dem Trend des sinkenden Vertrauensgrads, wobei die zweite Anweisungsnachricht dazu verwendet wird, anzuzeigen, dass die zu synchronisierenden Daten nicht korrekt aktualisiert worden sind.

8. Das Authentifizierungsverfahren nach Anspruch 1, ferner umfassend:
Einstellen der zweiten Vertrautheitsinformation gemäß einer von der Bilderzeugungsvorrichtung gesendeten Vertrautheitseinstellanweisung; und
Ausgeben der eingestellten zweiten Vertrautheitsinformation, wobei die eingestellte zweite Vertrautheitsinformation dazu verwendet wird, zu bestätigen, ob die zweite Vertrautheitsinformation korrekt eingestellt worden ist.

9. Das Authentifizierungsverfahren nach Anspruch 8, ferner umfassend:
Einstellen einer Identitätsbindungsinformation als eine Identitätsinformation des Verbrauchsmaterials; wobei die Identitätsbindungsinformation in der Vertrautheitseinstellanweisung enthalten ist, oder die Identitätsbindungsinformation in einer von der Bilderzeugungsvorrichtung gesendeten Identitätsinformationseinstellanweisung enthalten ist.

10. Eine Steuervorrichtung, umfassend:
eine erste Erfassungseinheit, die dazu ausgebildet ist, eine erste Vertrautheitsinformation zu erfassen, die von einer Bilderzeugungsvorrichtung gesendet wird, die ein Verbrauchsmaterial umfasst, wobei die erste Vertrautheitsinformation dazu verwendet wird, einen Vertrauensgrad der Bilderzeugungsvorrichtung in das Verbrauchsmaterial anzuzeigen;
eine zweite Erfassungseinheit, die dazu ausgebildet ist, eine zweite Vertrautheitsinformation zu erfassen, wobei die zweite Vertrautheitsinformation als ein Verifikationsmaßstab für eine Steuervorrichtung zum Verifizieren der ersten Vertrautheitsinformation verwendet wird, und dazu verwendet wird, den Vertrauensgrad des Verbrauchsmaterials in der Bilderzeugungsvorrichtung anzuzeigen;
eine Vertrautheitsverifikationseinheit, die dazu ausgebildet ist, ein Vertrautheitsverifikationsergebnis gemäß der ersten Vertrautheitsinformation und der zweiten Vertrautheitsinformation zu erhalten; und
eine Ausgabeeinheit, die dazu ausgebildet ist, das Vertrautheitsverifikationsergebnis auszugeben,
wobei das Vertrautheitsverifikationsergebnis mit einem von der Bilderzeugungsvorrichtung durchgeführten Authentifizierungsverfahren des Verbrauchsmaterialchips in Beziehung steht.

11. Die Steuervorrichtung nach Anspruch 10, wobei ein der ersten Vertrautheitsinformation entsprechender Vertrauensgrad negativ mit einer Dauer des Authentifizierungsverfahrens korreliert ist.

12. Die Steuervorrichtung nach Anspruch 10, wobei die Ausgabeeinheit ferner dazu ausgebildet ist:
wenn ein Fehler zwischen der ersten Vertrautheitsinformation und der zweiten Vertrautheitsinformation innerhalb eines voreingestellten Bereichs liegt, ein erstes Vertrautheitsverifikationsergebnis zu erhalten; und
wenn der Fehler zwischen der ersten Vertrautheitsinformation und der zweiten Vertrautheitsinformation nicht innerhalb des voreingestellten Bereichs liegt, ein zweites Vertrautheitsverifikationsergebnis zu erhalten;
wobei das zweite Vertrautheitsverifikationsergebnis dazu verwendet wird, zu bestimmen, ob die Bilderzeugungsvorrichtung die zweite Vertrautheitsinformation zurücksetzt.

13. Die Steuervorrichtung nach Anspruch 12, wobei die Steuervorrichtung ferner umfasst:
eine erste Aktualisierungseinheit, die dazu ausgebildet ist, die zweite Vertrautheitsinformation auf der Grundlage der ersten Vertrautheitsinformation zu aktualisieren, wenn ein Fehler zwischen der ersten Vertrautheitsinformation und der zweiten Vertrautheitsinformation besteht und der Fehler innerhalb des voreingestellten Bereichs liegt, und wenn ein der ersten Vertrautheitsinformation entsprechender Vertrauensgrad niedriger ist als ein der zweiten Vertrautheitsinformation entsprechender Vertrauensgrad; und
wobei die Ausgabeeinheit ferner dazu ausgebildet ist, wenn ein Fehler zwischen der ersten Vertrautheitsinformation und der zweiten Vertrautheitsinformation besteht und der Fehler innerhalb des voreingestellten Bereichs liegt, und wenn der der zweiten Vertrautheitsinformation entsprechende Vertrauensgrad niedriger ist als der der ersten Vertrautheitsinformation entsprechende Vertrauensgrad, die zweite Vertrautheitsinformation auszugeben, so dass die Bilderzeugungsvorrichtung die erste Vertrautheitsinformation auf der Grundlage der zweiten Vertrautheitsinformation aktualisiert.

14. Die Steuervorrichtung nach Anspruch 10, wobei die Ausgabeeinheit ferner dazu ausgebildet ist:
auf der Grundlage einer von der Bilderzeugungsvorrichtung gesendeten Vertrautheitsrücksetzanweisung eine der Vertrautheitsrücksetzanweisung entsprechende Vertrautheitsinformation auszugeben.

15. Die Steuervorrichtung nach Anspruch 10, ferner umfassend:
eine zweite Aktualisierungseinheit, die dazu ausgebildet ist, die zweite Vertrautheitsinformation gemäß einem Trend eines steigenden Vertrauensgrads zu aktualisieren, wenn ein erstes voreingestelltes Ereignis auftritt;
eine dritte Aktualisierungseinheit, die dazu ausgebildet ist, die zweite Vertrautheitsinformation gemäß einem Trend eines sinkenden Vertrauensgrads zu aktualisieren, wenn ein zweites voreingestelltes Ereignis auftritt; und
wobei die Ausgabeeinheit ferner dazu ausgebildet ist, die aktualisierte zweite Vertrautheitsinformation auszugeben, wobei die aktualisierte zweite Vertrautheitsinformation dazu verwendet wird, zu bestimmen, ob die Steuervorrichtung die zweite Vertrautheitsinformation korrekt aktualisiert hat.

16. Die Steuervorrichtung nach Anspruch 15, wobei die Steuervorrichtung dazu ausgebildet ist:
gemäß einer von der Bilderzeugungsvorrichtung gesendeten Datensynchronisationsinformation aktualisierte Daten, die der Datensynchronisationsinformation entsprechen, durch die Ausgabeeinheit auszugeben, wobei die aktualisierten Daten dazu verwendet werden, das erste voreingestellte Ereignis oder das zweite voreingestellte Ereignis auszulösen;
wobei die zweite Aktualisierungseinheit ferner dazu ausgebildet ist, die zweite Vertrautheitsinformation gemäß dem Trend des steigenden Vertrauensgrads zu aktualisieren, wenn die Steuervorrichtung eine erste Anweisungsnachricht empfängt, wobei die erste Anweisungsnachricht dazu verwendet wird, anzuzeigen, dass die Steuervorrichtung zu synchronisierende Daten korrekt aktualisiert hat; und
wobei die zweite Aktualisierungseinheit ferner dazu ausgebildet ist, die zweite Vertrautheitsinformation gemäß dem Trend des sinkenden Vertrauensgrads zu aktualisieren, wenn die Steuervorrichtung eine zweite Anweisungsnachricht empfängt, wobei die zweite Anweisungsnachricht dazu verwendet wird, anzuzeigen, dass die Steuervorrichtung die zu synchronisierenden Daten nicht korrekt aktualisiert hat.

17. Die Steuervorrichtung nach Anspruch 10, ferner umfassend:
eine Einstelleinheit, die dazu ausgebildet ist, die zweite Vertrautheitsinformation gemäß einer von der Bilderzeugungsvorrichtung gesendeten Vertrautheitseinstellanweisung einzustellen; und
wobei die Ausgabeeinheit ferner dazu ausgebildet ist: die eingestellte zweite Vertrautheitsinformation auszugeben, wobei die eingestellte zweite Vertrautheitsinformation dazu verwendet wird, zu bestätigen, ob die Steuervorrichtung die zweite Vertrautheitsinformation korrekt eingestellt hat.

18. Die Steuervorrichtung nach Anspruch 17, ferner umfassend:
eine Identitätseinstelleinheit, die dazu ausgebildet ist, eine Identitätsbindungsinformation als die Identitätsinformation des Verbrauchsmaterials einzustellen;
wobei die Identitätsbindungsinformation in der Vertrautheitseinstellanweisung enthalten ist oder die Identitätsbindungsinformation in einer von der Bilderzeugungsvorrichtung gesendeten Identitätsinformationseinstellanweisung enthalten ist.

19. Ein Verbrauchsmaterial, umfassend:
ein Gehäuse;
einen Entwicklermaterial-Aufnahmeabschnitt (11), der in dem Gehäuse angeordnet ist und zum Aufnehmen eines Entwicklermaterials dient; und
eine Steuervorrichtung nach einem der Ansprüche 10 bis 18.

20. Das Verbrauchsmaterial nach Anspruch 19, ferner umfassend:
ein Entwicklermaterial-Förderelement (13), das dazu ausgebildet ist, das Entwicklermaterial zu fördern.

21. Das Verbrauchsmaterial nach Anspruch 20, ferner umfassend:
eine Fotoleitertrommel; und
eine Laderolle, die dazu ausgebildet ist, die Fotoleitertrommel zu laden.

22. Ein Verbrauchsmaterial, umfassend:
eine Fotoleitertrommel;
eine Laderolle, die dazu ausgebildet ist, die Fotoleitertrommel zu laden; und
eine Steuervorrichtung nach irgendeinem der Ansprüche 10 bis 18.

## Revendications

1. Un procédé d'authentification, comprenant :
acquérir une première information d'affinité (S301) envoyée par un dispositif de formation d'image comprenant un consommable, dans lequel la première information d'affinité est utilisée pour indiquer un niveau de confiance du dispositif de formation d'image dans le consommable ;
acquérir une deuxième information d'affinité, dans lequel la deuxième information d'affinité est utilisée comme critère de vérification (S302) pour la première information d'affinité et est utilisée pour indiquer le niveau de confiance du consommable dans le dispositif de formation d'image ;
et
délivrer un résultat de vérification d'affinité (S303) selon la première information d'affinité et la deuxième information d'affinité,
dans lequel le résultat de vérification d'affinité est lié à une procédure d'authentification du consommable effectuée par le dispositif de formation d'image.

2. Le procédé d'authentification selon la revendication 1, dans lequel un niveau de confiance correspondant à la première information d'affinité est corrélé négativement à une durée de la procédure d'authentification.

3. Le procédé d'authentification selon la revendication 1, dans lequel le fait de délivrer le résultat de vérification d'affinité selon la première information d'affinité et la deuxième information d'affinité comprend :
comparer la première information d'affinité avec la deuxième information d'affinité pour obtenir le résultat de vérification d'affinité ;
lorsqu'une erreur entre la première information d'affinité et la deuxième information d'affinité est dans une plage prédéfinie, délivrer un premier résultat de vérification d'affinité ; et
lorsque l'erreur entre la première information d'affinité et la deuxième information d'affinité n'est pas dans la plage prédéfinie, délivrer un deuxième résultat de vérification d'affinité ;
dans lequel le deuxième résultat de vérification d'affinité est utilisé pour déterminer si le dispositif de formation d'image réinitialise la deuxième information d'affinité.

4. Le procédé d'authentification selon la revendication 3, comprenant en outre :
lorsqu'il existe une erreur entre la première information d'affinité et la deuxième information d'affinité et que l'erreur est dans une plage prédéfinie, et qu'un niveau de confiance correspondant à la première information d'affinité est inférieur à un niveau de confiance correspondant à la deuxième information d'affinité, mettre à jour la deuxième information d'affinité sur la base de la première information d'affinité ; ou
lorsqu'il existe une erreur entre la première information d'affinité et la deuxième information d'affinité et que l'erreur est dans une plage prédéfinie, et qu'un niveau de confiance correspondant à la deuxième information d'affinité est inférieur à un niveau de confiance correspondant à la première information d'affinité, délivrer la deuxième information d'affinité de sorte que le dispositif de formation d'image mette à jour la première information d'affinité sur la base de la deuxième information d'affinité.

5. Le procédé d'authentification selon la revendication 1, comprenant en outre :
sur la base d'une instruction de réinitialisation d'affinité envoyée par le dispositif de formation d'image, délivrer une information d'affinité correspondant à l'instruction de réinitialisation d'affinité.

6. Le procédé d'authentification selon la revendication 1, comprenant en outre :
lorsqu'un premier événement prédéfini se produit, mettre à jour la deuxième information d'affinité selon une tendance d'augmentation du niveau de confiance ;
lorsqu'un deuxième événement prédéfini se produit, mettre à jour la deuxième information d'affinité selon une tendance de diminution du niveau de confiance ; et
délivrer la deuxième information d'affinité mise à jour, dans lequel la deuxième information d'affinité mise à jour est utilisée pour déterminer si la deuxième information d'affinité a été correctement mise à jour.

7. Le procédé d'authentification selon la revendication 6, comprenant en outre :
selon des informations de synchronisation de données envoyées par le dispositif de formation d'image, délivrer des données mises à jour correspondant aux informations de synchronisation de données, dans lequel les données mises à jour sont utilisées pour déclencher le premier événement prédéfini ou le deuxième événement prédéfini ;
lorsqu'un premier message d'instruction est reçu, mettre à jour la deuxième information d'affinité selon la tendance d'augmentation du niveau de confiance, dans lequel le premier message d'instruction est utilisé pour indiquer que des données devant être synchronisées ont été correctement mises à jour ; et
lorsqu'un deuxième message d'instruction est reçu, mettre à jour la deuxième information d'affinité selon la tendance de diminution du niveau de confiance, dans lequel le deuxième message d'instruction est utilisé pour indiquer que les données devant être synchronisées n'ont pas été correctement mises à jour.

8. Le procédé d'authentification selon la revendication 1, comprenant en outre :
régler la deuxième information d'affinité selon une instruction de réglage d'affinité envoyée par le dispositif de formation d'image ; et
délivrer la deuxième information d'affinité réglée, dans lequel la deuxième information d'affinité réglée est utilisée pour confirmer si la deuxième information d'affinité a été correctement réglée.

9. Le procédé d'authentification selon la revendication 8, comprenant en outre :
régler une information de liaison d'identité comme information d'identité du consommable ; dans lequel l'information de liaison d'identité est incluse dans l'instruction de réglage d'affinité, ou l'information de liaison d'identité est incluse dans une instruction de réglage d'information d'identité envoyée par le dispositif de formation d'image.

10. Un dispositif de commande, comprenant :
une première unité d'acquisition, configurée pour acquérir une première information d'affinité envoyée par un dispositif de formation d'image comprenant un consommable, dans lequel la première information d'affinité est utilisée pour indiquer un niveau de confiance du dispositif de formation d'image dans le consommable ;
une deuxième unité d'acquisition, configurée pour acquérir une deuxième information d'affinité, dans lequel la deuxième information d'affinité est utilisée comme critère de vérification pour qu'un dispositif de commande vérifie la première information d'affinité, et est utilisée pour indiquer le niveau de confiance du consommable dans le dispositif de formation d'image ;
une unité de vérification d'affinité, configurée pour obtenir un résultat de vérification d'affinité selon la première information d'affinité et la deuxième information d'affinité ; et
une unité de sortie, configurée pour délivrer le résultat de vérification d'affinité,
dans lequel le résultat de vérification d'affinité est lié à une procédure d'authentification de la puce de consommable effectuée par le dispositif de formation d'image.

11. Le dispositif de commande selon la revendication 10, dans lequel un niveau de confiance correspondant à la première information d'affinité est corrélé négativement à une durée de la procédure d'authentification.

12. Le dispositif de commande selon la revendication 10, dans lequel l'unité de sortie est en outre configurée pour :
lorsqu'une erreur entre la première information d'affinité et la deuxième information d'affinité est dans une plage prédéfinie, obtenir un premier résultat de vérification d'affinité ; et
lorsque l'erreur entre la première information d'affinité et la deuxième information d'affinité n'est pas dans la plage prédéfinie, obtenir un deuxième résultat de vérification d'affinité ;
dans lequel le deuxième résultat de vérification d'affinité est utilisé pour déterminer si le dispositif de formation d'image réinitialise la deuxième information d'affinité.

13. Le dispositif de commande selon la revendication 12, dans lequel le dispositif de commande comprend en outre :
une première unité de mise à jour, configurée pour mettre à jour la deuxième information d'affinité sur la base de la première information d'affinité lorsqu'il existe une erreur entre la première information d'affinité et la deuxième information d'affinité et que l'erreur est dans la plage prédéfinie, et lorsqu'un niveau de confiance correspondant à la première information d'affinité est inférieur à un niveau de confiance correspondant à la deuxième information d'affinité ;et
dans lequel l'unité de sortie est en outre configurée pour, lorsqu'il existe une erreur entre la première information d'affinité et la deuxième information d'affinité et que l'erreur est dans la plage prédéfinie, et lorsque le niveau de confiance correspondant à la deuxième information d'affinité est inférieur au niveau de confiance correspondant à la première information d'affinité, délivrer la deuxième information d'affinité de sorte que le dispositif de formation d'image mette à jour la première information d'affinité sur la base de la deuxième information d'affinité.

14. Le dispositif de commande selon la revendication 10, dans lequel l'unité de sortie est en outre configurée pour :
sur la base d'une instruction de réinitialisation d'affinité envoyée par le dispositif de formation d'image, délivrer une information d'affinité correspondant à l'instruction de réinitialisation d'affinité.

15. Le dispositif de commande selon la revendication 10, comprenant en outre :
une deuxième unité de mise à jour, configurée pour mettre à jour la deuxième information d'affinité selon une tendance d'augmentation du niveau de confiance lorsqu'un premier événement prédéfini se produit ;
une troisième unité de mise à jour, configurée pour mettre à jour la deuxième information d'affinité selon une tendance de diminution du niveau de confiance lorsqu'un deuxième événement prédéfini se produit ;et
l'unité de sortie étant en outre configurée pour délivrer la deuxième information d'affinité mise à jour, dans lequel la deuxième information d'affinité mise à jour est utilisée pour déterminer si le dispositif de commande a correctement mis à jour la deuxième information d'affinité.

16. Le dispositif de commande selon la revendication 15, dans lequel le dispositif de commande est configuré pour :
selon des informations de synchronisation de données envoyées par le dispositif de formation d'image, délivrer, par l'intermédiaire de l'unité de sortie, des données mises à jour correspondant aux informations de synchronisation de données, dans lequel les données mises à jour sont utilisées pour déclencher le premier événement prédéfini ou le deuxième événement prédéfini ;
la deuxième unité de mise à jour étant en outre configurée pour mettre à jour la deuxième information d'affinité selon la tendance d'augmentation du niveau de confiance lorsque le dispositif de commande reçoit un premier message d'instruction, dans lequel le premier message d'instruction est utilisé pour indiquer que le dispositif de commande a correctement mis à jour les données devant être synchronisées ; et
la deuxième unité de mise à jour étant en outre configurée pour mettre à jour la deuxième information d'affinité selon la tendance de diminution du niveau de confiance lorsque le dispositif de commande reçoit un deuxième message d'instruction, dans lequel le deuxième message d'instruction est utilisé pour indiquer que le dispositif de commande n'a pas correctement mis à jour les données devant être synchronisées.

17. Le dispositif de commande selon la revendication 10, comprenant en outre :
une unité de réglage, configurée pour régler la deuxième information d'affinité selon une instruction de réglage d'affinité envoyée par le dispositif de formation d'image ; et
l'unité de sortie étant en outre configurée pour : délivrer la deuxième information d'affinité réglée, dans lequel la deuxième information d'affinité réglée est utilisée pour confirmer si le dispositif de commande a correctement réglé la deuxième information d'affinité.

18. Le dispositif de commande selon la revendication 17, comprenant en outre :
une unité de réglage d'identité, configurée pour régler une information de liaison d'identité comme information d'identité du consommable ;
dans lequel l'information de liaison d'identité est incluse dans l'instruction de réglage d'affinité, ou l'information de liaison d'identité est incluse dans une instruction de réglage d'information d'identité envoyée par le dispositif de formation d'image.

19. Un consommable, comprenant :
un boîtier ;
une portion de logement de révélateur (11), située dans le boîtier, pour loger un révélateur ; et
un dispositif de commande selon l'une quelconque des revendications 10 à 18.

20. Le consommable selon la revendication 19, comprenant en outre :
un élément de transport de révélateur (13), configuré pour transporter le révélateur.

21. Le consommable selon la revendication 20, comprenant en outre :
un tambour photosensible ; et
un rouleau de charge, configuré pour charger le tambour photosensible.

22. Un consommable, comprenant :
un tambour photosensible ;
un rouleau de charge, configuré pour charger le tambour photosensible ; et
un dispositif de commande selon l'une quelconque des revendications 10 à 18.
